(19) Europäisches Patentamt / European Patent Office / Office européen des brevets

(11) **EP 3 791 528 B1**

(12) # EUROPEAN PATENT SPECIFICATION

(45) Date of publication and mention
of the grant of the patent:
**19.11.2025 Bulletin 2025/47**

(21) Application number: **19733130.9**

(22) Date of filing: **10.05.2019**

(51) International Patent Classification (IPC):
**H04L 5/00** (2006.01)   **H04W 72/04** (2023.01)
**H04B 7/0413** (2017.01)

(52) Cooperative Patent Classification (CPC):
**H04L 5/0044; H04L 5/0064; H04L 5/0094;**
H04B 7/0413; H04L 5/0023; H04L 5/0039

(86) International application number:
**PCT/IB2019/053901**

(87) International publication number:
**WO 2019/215706 (14.11.2019 Gazette 2019/46)**

(54) **SYSTEMS AND METHODS FOR DOWNLINK CONTROL INFORMATION (DCI) SIZE ALIGNMENT**

SYSTEME UND VERFAHREN ZUR GRÖSSENAUSRICHTUNG VON DOWNLINK-STEUERINFORMATIONEN (DCI)

SYSTÈMES ET PROCÉDÉS D'ALIGNEMENT DE TAILLE D'INFORMATIONS DE COMMANDE EN LIAISON DESCENDANTE (DCI)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2018 US 201862670489 P**

(43) Date of publication of application:
**17.03.2021 Bulletin 2021/11**

(73) Proprietor: **Telefonaktiebolaget LM Ericsson
(publ)**
**164 83 Stockholm (SE)**

(72) Inventors:
• **KITTICHOKECHAI, Kittipong**
**177 63 Järfälla (SE)**
• **ANDERSSON, Mattias**
**172 39 Sundbyberg (SE)**
• **BLANKENSHIP, Yufei**
**Kildeer, Illinois 60047 (US)**
• **FRÖBERG OLSSON, Jonas**
**585 74 Ljungsbro (SE)**
• **SHAPIN, Alexey**
**976 32 Luleå (SE)**
• **WIKSTRÖM, Gustav**
**187 30 Täby (SE)**

(74) Representative: **Ericsson
Patent Development
Torshamnsgatan 21-23
164 80 Stockholm (SE)**

(56) References cited:
• **SAMSUNG: "DL Resource Allocation Aspects",
vol. RAN WG1, no. Hangzhou, China; 20170515 -
20170519, 6 May 2017 (2017-05-06),
XP051262193, Retrieved from the Internet
<URL:http://www.3gpp.org/ftp/tsg_ran/
WG1_RL1/TSGR1_89/Docs/> [retrieved on
20170506]**
• **NOKIA ET AL: "On resource allocation in
frequency domain for PDSCH and PUSCH in NR",
vol. RAN WG1, no. Qingdao, China; 20170627 -
20170630, 26 June 2017 (2017-06-26),
XP051300189, Retrieved from the Internet
<URL:http://www.3gpp.org/ftp/
Meetings_3GPP_SYNC/RAN1/Docs/> [retrieved
on 20170626]**
• **INTEL CORPORATION: "On compact DCI format
for NR URLLC", vol. RAN WG1, no. Sanya, China;
20180416 - 20180420, 7 April 2018 (2018-04-07),
XP051414104, Retrieved from the Internet
<URL:http://www.3gpp.org/ftp/tsg%5Fran/WG1%
5FRL1/TSGR1%5F92b/Docs/> [retrieved on
20180407]**

- MITSUBISHI ELECTRIC: "Multi-cluster PUSCH resource allocation", 3GPP DRAFT; R1-103238, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 4 May 2010 (2010-05-04), XP050420268, [retrieved on 20100504]
- SAMSUNG: "DL Resource Allocation Aspects", vol. RAN WG1, no. Hangzhou, China; 20170515 - 20170519, 6 May 2017 (2017-05-06), XP051262193, Retrieved from the Internet <URL:http://www.3gpp.org/ftp/tsg_ran/WG1_RL1/TSGR1_89/Docs/> [retrieved on 20170506]
- NOKIA ET AL: "On resource allocation in frequency domain for PDSCH and PUSCH in NR", vol. RAN WG1, no. Qingdao, China; 20170627 - 20170630, 26 June 2017 (2017-06-26), XP051300189, Retrieved from the Internet <URL:http://www.3gpp.org/ftp/Meetings_3GPP_SYNC/RAN1/Docs/> [retrieved on 20170626]
- INTEL CORPORATION: "On compact DCI format for NR URLLC", vol. RAN WG1, no. Sanya, China; 20180416 - 20180420, 7 April 2018 (2018-04-07), XP051414104, Retrieved from the Internet <URL:http://www.3gpp.org/ftp/tsg%5Fran/WG1%5FRL1/TSGR1%5F92b/Docs/> [retrieved on 20180407]

**Description**

<u>Technical Field</u>

The present disclosure relates to Downlink Control Information (DCI) in a wireless communication system.

<u>Background</u>

In a wireless communication network, the format in which the data is communicated between network nodes is transmitted as control information in a specified and known way. A receiving node (e.g. User Equipment (UE) in a Long Term Evolution (LTE) network) first decodes the control information that contains information on the transport format of the transmitted data. Examples of the formatting information are:

- allocation (where the data is located, typically in frequency),
- number of layers used,
- modulation and coding information,
- demodulation reference symbols, etc.

In New Radio (NR), there are four Downlink Control Information (DCI) formats used for downlink (DL) data assignments and uplink (UL) data grants. For DL and UL, there are two different formats each, wherein a first format is used in initial access while the second format is used after initial access when more advanced features are enabled. The size of the second format is larger than the first format.

A DCI (also referred to herein as a "DCI message") is transmitted over a Physical Downlink Control Channel (PDCCH) and is blindly searched for by the UE. The search performed by the UE is problematic in that one or more decoding attempts are performed based on a hypothetical PDCCH located in a predefined time-frequency location known as a search space entry. When the UE performs a decoding attempt, it assumes a certain size of the DCI. This means that if the UE tries to find both the larger DCI and the smaller DCI, the UE needs to perform two decoding attempts.

A set of time-frequency locations where a PDCCH may be received is called a search space. In NR, a region of time-frequency resources wherein the search space is defined is called a Control Region Set (CORESET) and can be configured to be very flexible. A UE can have several CORESETs configured.

There currently exist certain challenges. In NR and also in LTE Release 15, there is high attention to providing support for Ultra-Reliable Low-Latency Communication (URLLC) services. There is an ongoing discussion on the need for a DCI format for URLLC needs. The reason is that URLLC requires an extremely reliable transmission of DCI with an error rate requirement as low as $10^{-5}$ or lower. A transmission of a smaller DCI is more robust than a larger DCI for the same amount of consumed resources. Alternatively, a smaller DCI consumes fewer resources than a larger DCI for the same reliability, which means that, on a limited PDCCH resource, more DCIs can be transmitted while maintaining a robustness target.

Thus, there is a need for a new DCI format that is particularly well-suited to URLLC services.

A Samsung 3GPP submission ("DL Resource Allocation Aspects", RAN WG1 Meeting #89, R1-1708017, 15- 19 May 2017, Hangzhou, China) discloses details on DL resource allocation aspects. A Nokia et al 3GPP submission ("On resource allocation in frequency domain for PDSCH and PUSCH in NR", RAN WG1 Ad Hoc Meeting #2, R1-1710989, 27-30 June 2017, Qingdao, China) discloses a discussion on the resource allocation in frequency domain for both PDSCH and PUSCH. An Intel Corporation 3GPP submission ("On compact DCI format for NR URLLC", RAN WG1 Meeting #92bis, R1-1804740, 16-20 April 2018, Sanya, China) discloses a discussion on compact DCI design. A Mitsubishi Electric 3GPP submission ("Multi-cluster PUSCH resource allocation", RAN WG1 #61 meeting, R1-103238, 10-14 May 2010, Montreal, Canada) discloses a discussion on a topic regarding PUSCH resource allocation handling multiple clusters but also SU-MIMO.

<u>Summary</u>

The present invention is defined by the claims appended hereto. Embodiments of a method of operation of a wireless device for providing Downlink Control Information (DCI) format size alignment between a first DCI format, a second DCI format, and corresponding embodiments of a wireless device are disclosed herein. The method of operation of a wireless device for providing DCI format size alignment between a first DCI format and a second DCI format comprises determining one or more Resource Block Group (RBG) parameters for interpreting a frequency-domain resource allocation for the first DCI format. The one or more RBG parameters are either: (a) one or more RBG scaling factors or (b) one or more RBG sizes. The one or more RBG parameters adjust a granularity of the frequency-domain resource allocation for the first DCI format such that a number of bits needed to specify the frequency-domain resource allocation is adjusted such that a size of the first DCI format is aligned with a size of the second DCI format. The first DCI format is different to the second DCI format. Determining the one or more RBG parameters comprises receiving, from a base station, information that configures the one or more RBG parameters. The method further comprises receiving DCI having the first DCI format and interpreting the frequency-domain resource allocation of the DCI in accordance with the one or more RBG parameters.

In some embodiments, when excluding the frequency-domain resource allocation, an increase of a bit size of the first DCI format as compared to the second DCI format is L-K bits, where: K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format. In some embodiments, the one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

In some embodiments, interpreting the frequency-domain resource allocation of the DCI comprises interpreting the frequency-domain resource allocation of the DCI in accordance with the one or more RBG parameters together with a frequency-domain size of a corresponding bandwidth part. In some embodiments, the corresponding bandwidth part is either a corresponding initial bandwidth part or a corresponding active bandwidth part of the wireless device.

In some embodiments, the one or more RBG parameters comprise a first RBG parameter, where the first RBG parameter is either: (a) a first scaling factor (M) related to a starting position of the frequency-domain resource allocation or (b) a first RBG size related to the starting position of the frequency-domain resource allocation. Further, in some embodiments, interpreting the frequency-domain resource allocation of the DCI comprises determining the starting position of the frequency-domain resource allocation based on the first RBG parameter. Further, in some embodiments, determining the starting position of the frequency-domain resource allocation based on the first RBG parameter comprises determining the starting position of the frequency-domain resource allocation in units of a first RBG, where a size of the first RBG is either: (a) M Physical Resource Blocks (PRBs) or (b) the first RBG size. In some embodiments, the one or more RBG parameters comprise a second RBG parameter, where the second RBG parameter is either: (a) a second scaling factor (N) related to a length of the frequency-domain resource allocation or (b) a second RBG size related to the length of the frequency-domain resource allocation. In some embodiments, interpreting the frequency-domain resource allocation of the DCI comprises determining the length of the frequency-domain resource allocation based on the second RBG parameter. In some embodiments, determining the length of the frequency-domain resource allocation based on the second RBG parameter comprises determining the length of the frequency-domain resource allocation in units of a second RBG, where a size of the second RBG is either: (a) N PRBs or (b) the second RBG size. In some embodiments, the frequency resource allocation provides a Resource Indication Value (RIV) that is mapped to the starting position and the length of the frequency-domain resource allocation based on the first RBG parameter and the second RBG parameter, respectively. In some embodiments, the first scaling factor (M) is equal to the second scaling factor (N), and the number of bits needed to represent the RIV is:

$$\left\lceil log_2(\frac{N_{RB}^{BWP}}{M}(\frac{N_{RB}^{BWP}}{M} + 1)/2)\right\rceil$$

where $N_{RB}^{BWP}$ is the number of PRBs in the corresponding bandwidth part. In some embodiments, the first RBG parameter and the second RBG parameter are separate parameters. In some embodiments, the first RBG parameter and the second RBG parameter either: (a) are equal or (b) are the same parameter. In some embodiments, the first RBG parameter and the second RBG parameter have a value equal to $2^{\left(\frac{L-K}{2}\right)}$ where, when excluding the frequency-domain resource allocation: K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format.

In some embodiments, the DCI comprises one or more padding bits for DCI size alignment.

In some embodiments, receiving the information that configures the one or more RBG parameters comprises receiving the information via a semi-static configuration.

In some embodiments, a wireless device for providing DCI format size alignment between a first DCI format and a second DCI format is adapted to determine one or more RBG parameters for interpreting a frequency-domain resource allocation for the first DCI format. The one or more RBG parameters are either: (a) one or more RBG scaling factors or (b) one or more RBG sizes. The one or more RBG parameters adjust a granularity of the frequency-domain resource allocation such that a number of bits needed to specify the frequency-domain resource allocation is adjusted such that a size of the first DCI format is aligned with a size of the second DCI format. The first DCI format is different to the second DCI format. Determining the one or more RBG parameters comprises receiving, from a base station, information that configures the one or more RBG parameters. The wireless device is further adapted to receive DCI having the first DCI format and interpret the frequency-domain resource allocation of the DCI in accordance with the one or more RBG parameters.

Embodiments of a method of operation of a base station for providing DCI format size alignment between a first DCI format and a second DCI format and corresponding embodiments of a base station are also disclosed. The method of operation of a base station for providing DCI format size alignment between a first DCI format and a second DCI format comprises determining one or more RBG parameters for interpreting a frequency-domain resource allocation for the first DCI format. The one or more RBG parameters are either: (a) one or more RBG scaling factors or (b) one or more RBG sizes. The one or more RBG parameters adjust a granularity of the frequency-domain resource allocation for the first DCI format such that a number of bits needed to specify the frequency-domain resource allocation is adjusted such that a size of the first DCI format is aligned with a size of the second DCI format. The first DCI format is different to the second DCI format. Determining the one or more RBG parameters comprises determining the one or more RBG parameters at the base station. The method further comprises generating DCI having the first DCI format, where the DCI comprises a frequency-domain resource allocation in accordance with the one or more RBG parameters. The method further comprises transmitting the DCI to a wireless device.

In some embodiments, when excluding the frequency-domain resource allocation, an increase of a bit size of the first DCI format as compared to the second DCI format is L-K bits, where K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format. The one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

In some embodiments, the frequency-domain resource allocation of the DCI is provided in accordance with the one or more RBG parameters together with a frequency-domain size of a corresponding bandwidth part. In some embodiments, the corresponding bandwidth part is either a corresponding initial bandwidth part or a corresponding active bandwidth part of the wireless device.

In some embodiments, the one or more RBG parameters comprise a first RBG parameter, where the first RBG parameter is either: (a) a first scaling factor (M) related to a starting position of the frequency-domain resource allocation or (b) a first RBG size related to the starting position of the frequency-domain resource allocation. The starting position of the frequency-domain resource allocation is based on the first RBG parameter. In some embodiments, the starting position of the frequency-domain resource allocation is provided in units of a first RBG, where a size of the first RBG is either: (a) M PRBs or (b) the first RBG size. In some embodiments, the one or more RBG parameters comprise a second RBG parameter, where the second RBG parameter is either: (a) a second scaling factor (N) related to a length of the frequency-domain resource allocation or (b) a second RBG size related to the length of the frequency-domain resource allocation. The length of the frequency-domain resource allocation is based on the second RBG parameter. In some embodiments, the length of the frequency-domain resource allocation is provided in units of a second RBG, where a size of the second RBG is either: (a) N PRBs or (b) the second RBG size. In some embodiments, the frequency resource allocation provides a RIV that is mapped to the starting position and the length of the frequency-domain resource allocation based on the first RBG parameter and the second RBG parameter, respectively.

In some embodiments, the first scaling factor (M) is equal to the second scaling factor (N), and the number of bits needed to represent the RIV is:

$$\left\lceil log_2\left(\frac{N_{RB}^{BWP}}{M}\left(\frac{N_{RB}^{BWP}}{M}+1\right)/2\right)\right\rceil$$

where $N_{RB}^{BWP}$ is the number of PRBs in the corresponding bandwidth part. In some embodiments, the first RBG parameter and the second RBG parameter are separate parameters. In some embodiments, the first RBG parameter and the second RBG parameter either: (a) are equal or (b) are the same parameter. In some embodiments, the first RBG parameter and the second RBG parameter have a value equal to $2^{\left(\frac{L-K}{2}\right)}$ where, when excluding the frequency-domain resource allocation: K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format.

In some embodiments, the DCI comprises one or more padding bits for DCI size alignment.

In some embodiments, determining the one or more RBG parameters at the base station comprises dynamically determining the one or more RBG parameters at the base station.

Brief Description of the Drawings

The accompanying drawing figures incorporated in and forming a part of this specification illustrate several aspects of the disclosure, and together with the description serve to explain the principles of the disclosure.

Figures 1 through 4 illustrate possible frequency-domain resource allocations corresponding to various example embodiments of the present disclosure;

Figure 5 illustrates example Downlink Control Information (DCI) format sizes for different DCI formats for different active Bandwidth Part (BWP) sizes in accordance with some embodiments of the present disclosure;

Figure 6 illustrates an example of a wireless network in which embodiments of the present disclosure may be implemented;

Figure 7 illustrates one example of a User Equipment device (UE) in which embodiments of the present disclosure may be implemented;

Figure 8 is a schematic block diagram illustrating a virtualization environment in which functions implemented by some embodiments of the present disclosure may be virtualized;

Figure 9 is a flow chart that illustrates the operation of a wireless device in accordance with at least some aspects of embodiments of the present disclosure described herein;

Figure 10 is a flow chart that illustrates the operation of a network node in accordance with at least some aspects of embodiments of the present disclosure described herein;

Figure 11 illustrates an example communication system in which embodiments of the present disclosure may be implemented;

Figure 12 illustrates an example implementation of the UE, base station, and host computer of Figure 11;

Figures 13 through 16 are flow charts illustrating methods implemented in a communication system such as that of Figures 11 and 12; and

Figure 17 illustrates an example of an apparatus in which embodiments of the present disclosure may be implemented.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

There currently exist certain challenges with respect to Downlink Control Information (DCI) formats. More specifically, in New Radio (NR) and also in Long Term Evolution (LTE) Release 15, there is high attention to providing support for Ultra-Reliable Low-Latency Communication (URLLC) services. There is an ongoing discussion on the need for a DCI format for URLLC needs. The reason is that URLLC requires an extremely reliable transmission of DCI with an error rate requirement as low as $10^{-5}$ or lower. A transmission of a smaller DCI is more robust than a larger DCI for the same amount of consumed resources. Alternatively, a smaller DCI consumes fewer resources than a larger DCI for the same reliability, which means that, on a limited Physical Downlink Control Channel (PDCCH) resource, more DCIs can be transmitted while maintaining a robustness target.

However, if a new DCI format is to be introduced, its size will equal one of the available DCI sizes. Since one of the purposes of the new DCI format for URLLC is to have a small DCI size for robust PDCCH transmission, it is reasonable to define the new DCI format with the same size as the DCI formats 0-0 or 1-0.

To construct a new DCI format, one or more fields in the existing DCI formats 0-0 or 1-0 may be removed or the bit field sizes of one or more fields may be reduced. Moreover, one or more new fields may be added. The new DCI format should be size-aligned with the DCI formats 0-0 or 1-0, whose size depends on the initial or active bandwidth parts. As such, there is a need for a method of DCI size alignment between the new DCI format and the existing DCI formats 0-1 or 1-0.

Certain aspects of the present disclosure and their embodiments may provide solutions to these or other challenges. Frequency-domain resource allocation of the new DCI format can follow the same Type 1 resource allocation as used for DCI formats 0-1 and 1-0. However, the start and/or length of the allocation may be done in a unit of a group of Physical Resource Blocks (PRBs). Herein, the group of PRBs is also referred to as a Resource Block Group (RBG).

Embodiments of the present disclosure provide methods for DCI size alignment based upon adjusting frequency-domain allocation in the new DCI format by either:

- scaling the RBG size, or
- configuring the RBG size in connection with the configuration of the new DCI format.

Moreover, the present disclosure teaches a method to select the RBG size scaling factor to make the size of new DCI format align with the size of DCI format 0-0/1-0. Further still, the present disclosure also teaches a method to configure the RBG size to make the size of new DCI format align with the size of DCI format 0-0/1-0.

Now, the discussion turns to a more detailed description of some embodiments of the present disclosure. However, before describing embodiments of the present disclosure, a description of the conventional DCI formats 0-0 and 1-0 as well as frequency domain resource allocation Type 1 for DCI formats 0-0 and 1-0 is beneficial.

DCI formats 0-0/1-0 support frequency-domain resource allocation Type 1, specifying start and length of the frequency-domain allocation in a unit of a PRB. According to Third Generation Partnership Project (3GPP) Technical Specification (TS) 38.214 V15.1.1 (R1-1805796), for a given bandwidth part size $N_{BWP}^{size}$ PRBs, the uplink (UL) and downlink (DL) Type 1 resource allocation field comprises a Resource Indication Value (RIV) corresponding to a starting virtual resource block ($RB_{start}$) and a length in terms of contiguously allocated resource blocks ($L_{RBs}$). The RIV is defined by:

$$\text{if } (L_{RBs} - 1) \leq \lfloor N_{BWP}^{size}/2 \rfloor \text{ then}$$

$$RIV = N_{BWP}^{size}(L_{RBs} - 1) + RB_{start}$$

$$\text{else}$$

$$RIV = N_{BWP}^{size}(N_{BWP}^{size} - L_{RBs} + 1) + (N_{BWP}^{size} - 1 - RB_{start})$$

$$\text{where } L_{RBs} \geq 1 \text{ and shall not exceed } N_{BWP}^{size} - RB_{start}.$$

In NR, the smaller DCI for UL grants is called Format 0_0 and comprises the following fields (see 3GPP TS 38.212 V15.1.1 (R1-1805794)):

---

7.3.1.1.1 Format 0_0

DCI format 0_0 is used for the scheduling of PUSCH in one cell.

The following information is transmitted by means of the DCI format 0_0 with CRC scrambled by C-RNTI:

- Identifier for DCI formats - 1 bit
- The value of this bit field is always set to 0, indicating an UL DCI format

- Frequency domain resource assignment - $\lceil \log_2(N_{RB}^{UL,BWP}(N_{RB}^{UL,BWP}+1)/2) \rceil$ bits where

- $N_{RB}^{UL,BWP}$ is the size of the initial bandwidth part in case DCI format 0_0 is monitored in the common search space

- $N_{RB}^{UL,BWP}$ is the size of the active bandwidth part in case DCI format 0_0 is monitored in the UE specific search space and satisfying
  - the total number of different DCI sizes monitored per slot is no more than 4, and
  - the total number of different DCI sizes with C-RNTI monitored per slot is no more than 3
- For PUSCH hopping with resource allocation type 1:
  - $N_{UL\_hop}$ MSB bits are used to indicate the frequency offset according to Subclause 6.3 of [6, TS 38.214], where $N_{UL\_hop} = 1$ if the higher layer parameter *Frequency-hopping-offsets-set* contains two offset values and $N_{UL\_hop} = 2$ if the higher layer parameter *Frequency-hopping-offsets-set* contains four offset values

---

(continued)

7.3.1.1.1 Format 0_0

- $\left\lceil \log_2(N_{RB}^{ULBWP}(N_{RB}^{ULBWP}+1)/2) \right\rceil - N_{UL\_hop}$ bits provides the frequency domain resource allocation according to Subclause 6.1.2.2.2 of [6, TS 38.214]

  - For non-PUSCH hopping with resource allocation type 1:

  - $\left\lceil \log_2(N_{RB}^{ULBWP}(N_{RB}^{ULBWP}+1)/2) \right\rceil$ bits provides the frequency domain resource allocation according to Subclause 6.1.2.2.2 of [6, TS 38.214]

- Time domain resource assignment - X bits as defined in Subclause 6.1.2.1 of [6, TS 38.214]
- Frequency hopping flag - 1 bit.
- Modulation and coding scheme - 5 bits as defined in Subclause 6.1.3 of [6, TS 38.214]
- New data indicator - 1 bit
- Redundancy version - 2 bits as defined in Table 7.3.1.1.1-2
- HARQ process number - 4 bits
- TPC command for scheduled PUSCH - [2] bits as defined in Subclause x.x of [5, TS 38.213]
- UL/SUL indicator - 1 bit for UEs configured with SUL in the cell as defined in Table 7.3.1.1.1-1 and the number of bits for DCI format 1_0 before padding is larger than the number of bits for DCI format 0_0 before padding; 0 bit otherwise.

    - If the UL/SUL indicator is present in DCI format 0_0 and the higher layer parameter *dynamicPUSCHSUL* is set to *Disabled,* the UE ignores the UL/SUL indicator field in DCI format 0_0, and the corresponding PUSCH scheduled by the DCI format 0_0 is for the carrier indicated by the higher layer parameter *pucchCarrierSUL;*

    - If the UL/SUL indicator is not present in DCI format 0_0, the corresponding PUSCH scheduled by the DCI format 0_0 is for the carrier indicated by the higher layer parameter *pucchCarrierSUL.*

In NR, Format 1_0 is used for the scheduling of Physical Downlink Shared Channel (PDSCH) in one DL cell and comprises the following fields (see 3GPP TS 38.212 V15.1.1 (R1-1805794)):

7.3.1.2.1 Format 1_0

DCI format 1_0 is used for the scheduling of PDSCH in one DL cell.

The following information is transmitted by means of the DCI format 1_0 with CRC scrambled by C-RNTI:

- Identifier for DCI formats - 1 bits

    - The value of this bit field is always set to 1, indicating a DL DCI format

- Frequency domain resource assignment - $\left\lceil \log_2(N_{RB}^{DL,BWP}(N_{RB}^{DL,BWP}+1)/2) \right\rceil$ bits

  - $N_{RB}^{DL,BWP}$ is the size of the initial bandwidth part in case DCI format 1_0 is monitored in the common search space

  - $N_{RB}^{DL,BWP}$ is the size of the active bandwidth part in case DCI format 1_0 is monitored in the UE specific search space and satisfying

    - the total number of different DCI sizes monitored per slot is no more than 4, and
    - the total number of different DCI sizes with C-RNTI monitored per slot is no more than 3

- Time domain resource assignment - X bits as defined in Subclause 5.1.2.1 of [6, TS 38.214]
- VRB-to-PRB mapping - 1 bit according to Table 7.3.1.1.2-33
- Modulation and coding scheme - 5 bits as defined in Subclause 5.1.3 of [6, TS 38.214]
- New data indicator - 1 bit
- Redundancy version - 2 bits as defined in Table 7.3.1.1.1-2
- HARQ process number - 4 bits
- Downlink assignment index - 2 bits as defined in Subclause 9.1.3 of [5, TS 38.213], as counter DAI
- TPC command for scheduled PUCCH - [2] bits as defined in Subclause 7.2.1 of [5, TS 38.213]
- PUCCH resource indicator - 3 bits as defined in Subclause 9.2.3 of [5, TS 38.213]

(continued)

| 7.3.1.2.1 Format 1_0<br>    - PDSCH-to-HARQ_feedback timing indicator - [3] bits as defined in Subclause x.x of [5, TS38.213] |
|---|

To construct a new DCI format with the same size as DCI format 0-0 and 1-0, one or more fields in the existing DCI formats 0-0 or 1-0 may be removed or the bit field sizes of one or more fields may be reduced. Moreover, one or more new fields may be added. Tables 1 and 2 below provide examples of the contents of the new DCI format where the size of the new DCI format is aligned with the size of DCI formats 0-0 or 1-0.

Table 1: Example of new DCI format for DL assignment with Cyclic Redundancy Check (CRC) scrambled by Cell Radio Network Temporary Identifier (C-RNTI)

| DCI for DL assignment | Format 1-0 (Bits) | New DCI format (Bits) | Comment |
|---|---|---|---|
| Header/Identifier for DCI format | 1 | 1 | |
| Frequency-domain PDSCH resources | Depend on initial or active bandwidth part (BWP) | *Depend on initial or active BWP together with RBG scaling factor* | The field in the new DCI format can be reduced by using coarser granularity of RBG, e.g., RBG size is scaled with a RBG scaling factor. |
| Time-domain PDSCH resources | 4 | 4 | |
| VRB-to-PRB mapping | 1 | *0* | The field in the new DCI format can be reduced by configuring this semi-statically, e.g., either only distributed/interleaved mapping or only localized. |
| Modulation and coding scheme | 5 | *4* | The field in the new DCI format can be reduced by using a limited set of mobile switching centers (MCSs) relevant for URLLC (low modulation orders and code rates) |
| New data indicator | 1 | *1* | |
| Redundancy version (RV) | 2 | *1* | The field in the new DCI format can be reduced by using a limited set of RV sequences taking into account no. of retransmission allowed within latency limit. |
| HARQ process number | 4 | *2* | The field in the new DCI format can be reduced by using smaller HARQ process number taking into account faster HARQ round trip time and short HARQ lifetime due to latency limit. |
| Downlink Assignment Index | 2 | 2 | |
| TPC command for PUCCH | 2 | 2 | |
| PUCCH resource indicator | 3 | 2 | |
| PDSCH-to-HARQ feedback timing indicator | 3 | *0* | The field in the new DCI format can be reduced by using fixed configuration of HARQ timing for low latency operation |
| | | | |
| Carrier indicator | | **3 or 0** | A field from DCI format 1-1 can be added to the new DCI format. |

(continued)

| DCI for DL assignment | Format 1-0 (Bits) | New DCI format (Bits) | Comment |
|---|---|---|---|
| Bandwidth part indicator | | **2,1 or 0** | A field from DCI format 1-1 can be added to the new DCI format. |
| Rate matching indicator | | **2,1 or 0** | A field from DCI format 1-1 can be added to the new DCI format. |
| Zero power channel state information reference signal (ZP CSI-RS) trigger | | **2,1 or 0** | A field from DCI format 1-1 can be added to the new DCI format. |
| Antenna port | | **4, 5, 6** | A field from DCI format 1-1 can be added to the new DCI format. |

Table 2: Example of new DCI format for UL grant with CRC scrambled by C-RNTI

| DCI for UL grant | Format 0-0 (Bits) | New DCI format (Bits) | Comment |
|---|---|---|---|
| Header/Identifier for DCI format | 1 | 1 | |
| Frequency-domain PUSCH resources | Depend on initial or active BWP | *Depend on initial or active BWP together with RBG scaling factor* | The field in the new DCI format can be reduced by using coarser granularity of RBG, e.g., RBG size is scaled with a RBG scaling factor. |
| Time-domain PUSCH resources | 4 | 4 | |
| Frequency hopping flag | 1 | 1 | |
| Modulation and coding scheme | 5 | *4* | The field in the new DCI format can be reduced by using a limited set of MCSs relevant for URLLC (low modulation orders and code rates) |
| New data indicator | 1 | 1 | |
| Redundancy version | 2 | *1* | The field in the new DCI format can be reduced by using a limited set of RV sequences taking into account no. of retransmission allowed within latency limit. |
| HARQ process number | 4 | *2* | The field in the new DCI format can be reduced by using smaller HARQ process number taking into account faster HARQ round trip time. |
| TPC command for PUSCH | 2 | 2 | |
| UL/SUL indicator | | *0* | The field in the new DCI format can be reduced. |
| | | | |
| Carrier indicator | | **3 or 0** | A field from DCI format 0-1 can be added to the new DCI format. |
| Bandwidth part indicator | | **2,1 or 0** | A field from DCI format 0-1 can be added to the new DCI format. |
| Rate matching indicator | | **2,1 or 0** | A field from DCI format 0-1 can be added to the new DCI format. |

(continued)

| DCI for UL grant | Format 0-0 (Bits) | New DCI format (Bits) | Comment |
|---|---|---|---|
| CSI request | | **Up to 6 bits** | A field from DCI format 0-1 can be added to the new DCI format. |
| Antenna port | | **Up to 5 bits** | A field from DCI format 0-1 can be added to the new DCI format. |
| Precoding information | | **Up to 6 bits** | A field from DCI format 0-1 can be added to the new DCI format. |

As seen from the examples above, it is expected that fields such as frequency-domain resource allocation, Modulation and Coding Scheme (MCS), and Hybrid Automatic Repeat Request (HARQ) process number can be reduced (see, e.g., parts in italics and underline in Tables 1 and 2). Further, extra fields such as those related to multi-antenna operation can be added (see, e.g., parts in bold in Tables 1 and 2). In some examples, there is a field indicating an MCS table such as the following embodiments:

- The 5-bit legacy MCS field is split into a 1-bit field indicating an MCS table and a 4-bit field indicating the MCS (i.e., indicating the MCS index of row in the indicated MCS table that contains the desired MCS).
- One bit for the MCS table indication can be reallocated from another field, and the 5-bit legacy MCS field is used for the MCS index indication.

Since the size of DCI formats 0-0/1-0 depends on the sizes of the initial bandwidth part or the active bandwidth part, the alignment of the size of the new DCI format to the size of DCI formats 0-0/1-0 is not always fixed. Rather, it depends on the size of the initial bandwidth part or the active bandwidth part determining the size of (i.e., number of bits in) the frequency-domain allocation field, which is $\lceil log_2(N_{RB}^{BWP}(N_{RB}^{BWP} + 1)/2)\rceil$ (based on resource allocation (RA) type 1). Here $N_{RB}^{BWP}$ is the number of allocation units in PRBs (i.e., the number of PRBs) for a given Bandwidth Part (BWP).

Let us assume that the total size reduction for the new DCI format from one or more fields (excluding the frequency-domain resource allocation field) in the existing DCI formats 0-0/1-0 is equal to K bits (may or may not depend on the size of the BWP). Also, let us assume that the total number of added bits for the new DCI format from one or more new fields is equal to L bits (may or may not depend on the size of the BWP). That is, to align with the size of DCI format 0-0/1-0 for a given BWP, reduction of an additional L-K bits are required. In other words, not considering the frequency-domain resource allocation field, the bit increase of the new DCI format as compared to the existing DCI formats 0-0/1-0 is L-K bits. Thus, in order to align the size of the new DCI format with the existing DCI formats 0-0/1-0, a bit reduction of L-K bits is needed.

In one embodiment, the DCI size alignment is dynamically adjusted according to the size of the initial BWP or the active BWP.

In one embodiment, the DCI size alignment is done by adjusting the frequency-domain allocation using different RBG sizes as units for length and start. For example, the start position can be considered in units of RBGs of size M PRBs (possible starting position at every M PRBs), while the length can be considered in units of RBGs of size N PRBs (possible lengths of N PRBs, 2N PRBs, etc.). The values of M and N may or may not be the same and can be semi-statically configured.

To adjust the frequency-domain resource allocation using different RBG sizes as units for length and start, the RIV in 3GPP TS 38.214 V15.1.1 (R1-1805796) can be changed as follows:

Let $S_R = \left\lceil \frac{N_{BWP}^{size}}{M} \right\rceil$ and $S_L = \left\lceil \frac{N_{BWP}^{size}}{N} \right\rceil$. Let $L_{RBs} = \min(N_{BWP}^{size}, N \cdot L'_{RBs})$ and $RB_{start} = M \cdot RB'_{start}$. This is possible since the start position and lengths are multiples of M and N respectively. The RIV provided by the frequency-domain resource allocation corresponds to a starting virtual resource block ($RB'_{start}$) and a length in terms of contiguously allocated resource blocks ($L'_{RBs}$), where $RB'_{start}$ is in units of M PRBs (i.e., in units of a first RBG size which is M PRBs) and $L'_{RBs}$ is in units of $N$ PRBs (i.e., in units of a second RBG size which is N PRBs). The RIV is defined by:

If $(L'_{RBs} - 1) \leq \lfloor S_L/2 \rfloor$, then

$$RIV = S_R (L'_{RBs} - 1) + RB'_{start}$$

else

$$RIV = S_R (S_L - L'_{RBs} + 1) + (S_R - 1 - RB'_{start})$$

where $L'_{RBs} \geq 1$ and $L_{RBs}$ shall not exceed $N^{size}_{BWP} - RB_{start}$.

Using the above, the RIV can be computed based on $RB'_{start}$ and $L'_{RBs}$. Likewise, the values of $RB'_{start}$ and $L'_{RBs}$ can be determined from the RIV. Note that, in the above, the various parameters can be described as follows:

- **$S_R$** is the number of possible starting positions for the frequency-domain resource allocation in the BWP. $S_R$ can be defined as:

$$S_R = \left\lceil \frac{N^{size}_{BWP}}{M} \right\rceil$$

where "M" is sometimes referred to herein as a starting position scaling factor. Importantly, in the conventional DCI format 0-0/1-0, the starting position can be any PRB in the BWP. However, here, the starting position can be only at, e.g., PRB 1, PRB 1+M, PRB 1+2M, etc. Note that PRB 1 is only an example of the starting PRB in the BWP. In other words, the starting position $RB'_{start}$ is defined in units of M PRBs (i.e., in units of a first RBG having a size of M PRBs).
- **$S_L$** is the number of possible lengths for the frequency-domain resource allocation in the BWP. $S_L$ can be defined as:

$$S_L = \left\lceil \frac{N^{size}_{BWP}}{N} \right\rceil$$

where "N" is sometimes referred to herein as a length scaling factor. Importantly, in the conventional DCI format 0-0/1-0, the length can be any number of PRBs in the range of 1 up to the size of the BWP. However, here, the length can be only, e.g., N PRBs, 2N PRBs, etc. up to the size of the BWP. In other words, the length $L'_{RBs}$ is defined in units of N PRBs (i.e., in units of a second RBG having a size of N PRBs).
- **$L'_{RBs}$** is the number of contiguously allocated RBGs of size N (i.e., the size of the frequency-domain resource allocation in units of N PRBs).
- **$L_{RBs}$** is the number of contiguously allocated resource blocks (i.e., the size of the frequency-domain resource allocation in units of PRBs), where:

$$L_{RBs} = \min(N^{size}_{BWP}, N \cdot L'_{RBs})$$

- **$RB'_{start}$** is the position of the starting RBG for the frequency-domain resource allocation in units of M PRBs.
- **$RB_{start}$** is the position of the starting PRB for the frequency-domain resource allocation in units of PRBs, where

$$RB_{start} = M \cdot RB'_{start}.$$

Other options are possible, where, e.g., the ceil operation in the definition of one or both of $S_R$ or $S_L$ is replaced by a floor operation. In some of these options, the min in the definition of $L_{RBs}$ is not needed and $L_{RBs} = N \cdot L'_{RBs}$.

Note that the condition that $L_{RBs}$ shall not exceed $N^{size}_{BWP} - RB_{start}$ can be relaxed in some cases. Instead, this condition may be replaced with the condition that $RB_{start} + L_{RBs}$ does not exceed $N \cdot S_L$. In the case that $L_{RBs}$ exceeds $N^{size}_{BWP} - RB_{start}$, this shall be interpreted as an allocation that starts at $RB_{start}$ and ends at the edge of the BWP.

For example, the number of bits needed to represent RIV is $\lceil log_2(S_L(S_R + 1)/2) \rceil$.

M and N can be chosen such that the reduction in DCI size compared to the fallback DCI formats (e.g., DCI formats 0-0 or 1-0) matches a needed number. This can be done separately at the UE and NR Node B (gNB) according to a predetermined algorithm. One way is to set M = N and choose M as the smallest power of 2 such that reduction in size of the frequency-domain resource allocation field is big enough (e.g., greater than or equal to L-K bits as described above). In other embodiments, either M or N is equal to 1 and the other one is chosen as the smallest power of 2 such that reduction in size of the frequency-domain resource allocation field is big enough (e.g., such that the reduction in the size of the frequency-domain resource allocation field is greater than or equal to L-K bits as described above). In other embodiments, M and N are reduced one at a time until the size of the frequency-domain resource allocation field is small enough (e.g., such that the reduction in the size of the frequency-domain resource allocation field is greater than or equal to L-K bits as described above).

As mentioned earlier, one possible scheduling option is that the gNB considers $L_{RBs}$ and $RB_{start}$ to be multiples of N and M, respectively. There are different special cases associated with the above frequency-domain allocation, e.g.,

1. M = N = 1 corresponds to the original frequency domain resource allocation where the start position and length are considered in units of 1 PRB.

2. M = 1, N = 2 corresponds to the frequency domain resource allocation where the start position is considered in units of 1 PRB, and length is considered in units of 2 PRBs.

3. M = 2, N = 1 corresponds to the frequency domain resource allocation where the start position is considered in units of 2 PRBs, and length is considered in units of 1 PRB.

4. M = N = 2 corresponds to the frequency domain resource allocation where the start position and length are considered in units of 2 PRBs.

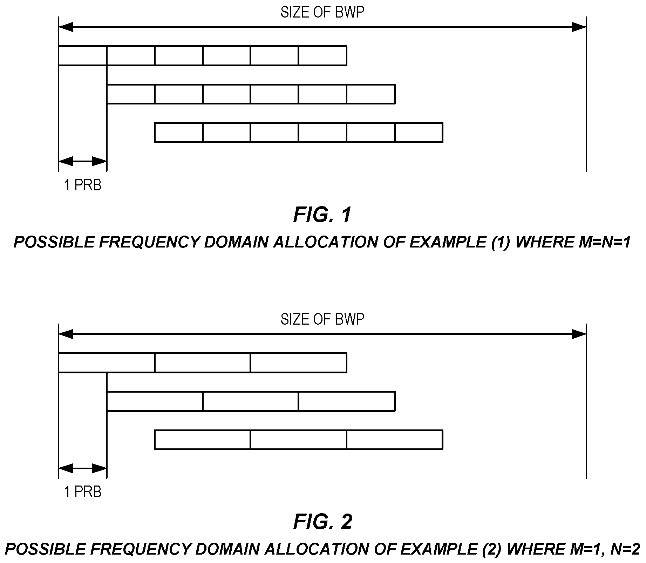

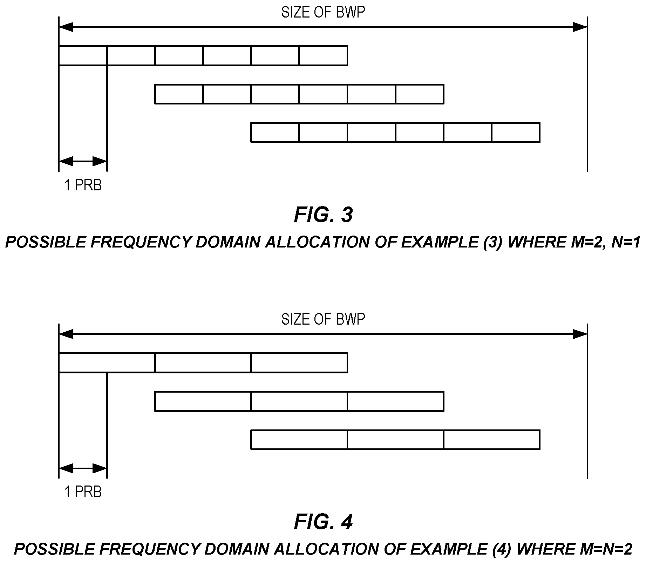

Figures 1 through 4 illustrate possible allocations corresponding to above examples.

In one example, if M=N, the size of the frequency-domain resource allocation field can be reduced from

$$\lceil log_2(N_{RB}^{BWP}(N_{RB}^{BWP} + 1)/2)\rceil \text{ to } \left\lceil log_2\left(\frac{N_{RB}^{BWP}}{M}\left(\frac{N_{RB}^{BWP}}{M} + 1\right)/2\right)\right\rceil.$$

In some embodiments, the DCI size alignment is achieved by adjusting the frequency-domain allocation by selecting the smallest M (RBG scaling factor) that gives frequency-domain allocation reduction larger or equal to L-K (additional bits required to align the DCI size). In this case, the value of M can be implicitly determined. Typically, the scaling factor M can be chosen to be $2^{\left(\frac{L-K}{2}\right)}$.

To further align with the size of DCI format 0-0/1-0, some padding bits can be appended to the new DCI format.

In another embodiment, the DCI size alignment is achieved by adjusting the frequency-domain allocation using a semi-statically configured RBG size.

In one embodiment, RBG sizes are configured in association with the configuration of the new DCI format.

In one embodiment, the configured RBG sizes (e.g., configured RBG size for start and/or the RBG size for length) depend on the initial or active BWPs.

To further align with the size of DCI format 0-0/1-0, some padding bits can be appended to the new DCI format.

In some embodiments, the RBG size is determined from the number of bits for frequency domain allocation. In such embodiments, bit-sizes for some other fields may be semi-statically configured and the number of bits for frequency domain allocation is determined as number of bits available minus the sum of bits for other fields. For an UL example, suppose there are in total X bits available and let, e.g., the number of bits used for pre-coding indication to be semi-static to Y bits while the rest (except frequency domain allocation) of the fields are static with total sum Z. The UE then determines the number of bits for frequency domain allocation as X - Y - Z and from this number determines the RBG size to assume. If the number of bits used for pre-coding indication is re-configured to Y', the UE re-calculates the number of bits for frequency domain allocation as X - Y' - Z and hence may determine another RBG size.

In another embodiment, one can define a list of actions of specific order which can be used to make DCI format sizes aligned. Actions can continue until the DCI format becomes aligned. This may include:

• Formula-based calculations which gives correct RBG size or scaling factor;
• List of fields which must be reduced according to defined order up to defined value, e.g., at first, one can reduce HARQ process field bit-by-bit up to 2 bits, at second, one can reduce Redundancy Version (RV) field up to 1 bit, at third one can change RBG size, etc.;
• Other actions from embodiments of this disclosure.

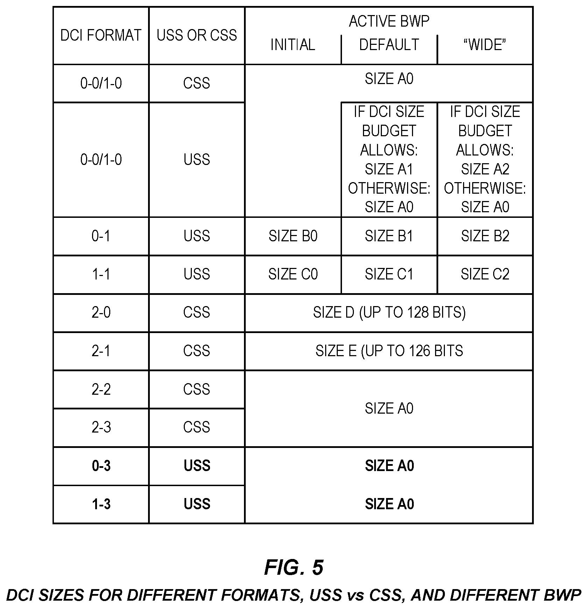

A discussion will now be given for an example embodiment to align the size of the new DCI format with the size of DCI format 0-0/1-0 for an initial downlink BWP. In Figure 5, the DCI sizes are shown for different formats, User Equipment device (UE) Specific Search Space (USS) versus Common Search Space (CSS), and different BWP. In Embodiment 1, new DCI types are introduced, which are aligned to have size A0, i.e., aligned with DCI format 0-0/1-0 in CSS (which is also the DCI format 0-0/1-0). In the following, the new DCI types are called DCI format 0-3 and 1-3, respectively, where DCI format 0-3 is for scheduling Physical Uplink Shared Channel (PUSCH) of URLLC with CRC scrambled by C-RNTI, and DCI format 1-3 is for scheduling PDSCH of URLLC with CRC scrambled by C-RNTI. Note that while URLLC service is used as an example, the DCI formats 0-3 and 1-3 can be used for other service types.

The initial BWP may be different (typically smaller) than the active BWP. Thus, there needs to be a way to re-interpret the frequency domain resource allocation of the initial BWP to that of the active BWP. This is the same problem when DCI format 0-0/1-0 is defined for initial BWP but another BWP size is active. Thus, in principle, the same method adopted to solve the re-interpretation of DCI 0-0/1-0 can be used for DCI format 0-3/1-3 as well.

Several solutions have been identified for this problem. The most useful solution for URLLC is to scale the start and/or length in interpretation of RIV. That is, the RIV is interpreted according to the (size-defining) initial BWP, resulting in start and length. The start/length is applied to the active BWP, where the data transmission occurs but one or both of start/length is interpreted in terms of groups of Resource Blocks (RBs) (i.e., the start and length values are multiplied by a factor K prior to being applied to the active BWP). This solution allows for a wider range in start and length within the active BWP. This solution is similar to DCI format 1C in LTE.

Resource allocation granularity of DCI format 0-0 and 1-0 is 1 RB. In contrast, DCI format 0-3 and 1-3 has resource allocation granularity of K PRBs.

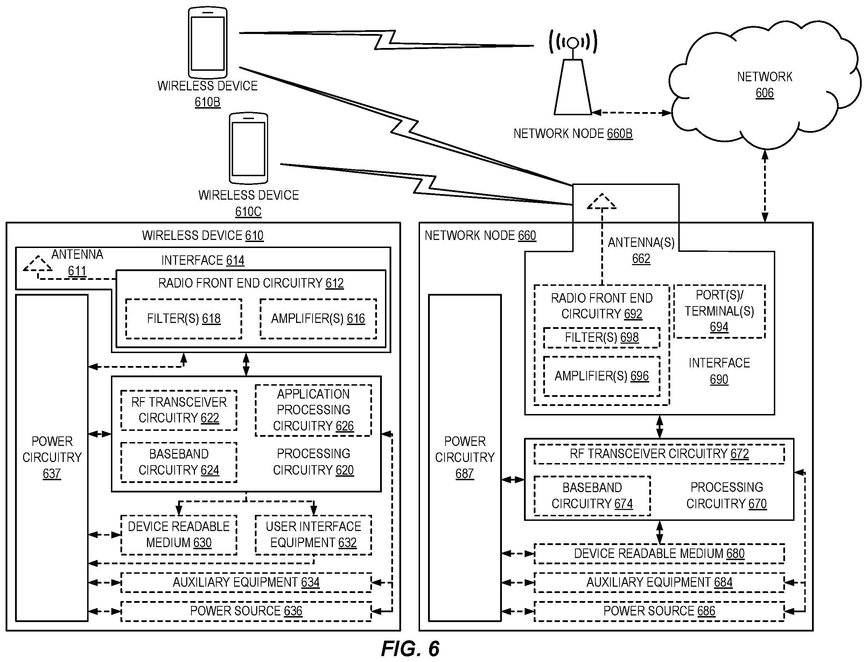

Although the subject matter described herein may be implemented in any appropriate type of system using any suitable components, the embodiments disclosed herein are described in relation to a wireless network, such as the example wireless network illustrated in Figure 6. For simplicity, the wireless network of Figure 6 only depicts a network 606, network nodes 660 and 660B, and Wireless Devices (WDs) 610, 610B, and 610C. In practice, a wireless network may further include any additional elements suitable to support communication between wireless devices or between a wireless device and another communication device, such as a landline telephone, a service provider, or any other network node or end device. Of the illustrated components, the network node 660 and the WD 610 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable Second, Third, Fourth, or Fifth Generation (2G, 3G, 4G, or 5G) standards; Wireless Local Area Network (WLAN) standards, such as the IEEE 802.11 standards; and/or any other appropriate wireless communication standard, such as the Worldwide Interoperability for Microwave Access (WiMax), Bluetooth, Z-Wave, and/or ZigBee standards.

The network 606 may comprise one or more backhaul networks, core networks, Internet Protocol (IP) networks, Public Switched Telephone Networks (PSTNs), packet data networks, optical networks, Wide Area Networks (WANs), Local Area Networks (LANs), WLANs, wired networks, wireless networks, metropolitan area networks, and other networks to enable communication between devices.

The network node 660 and the WD 610 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged, and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, Access Points (APs) (e.g., radio APs), Base Stations (BSs) (e.g., radio base stations, Node Bs, evolved Node Bs (eNBs), and gNBs). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or Remote Radio Units (RRUs), sometimes referred to as Remote Radio Heads (RRHs). Such RRUs may or may not be integrated with an antenna as an antenna integrated radio. Parts of a distributed radio base station may also be referred to as nodes in a Distributed Antenna System (DAS). Yet further examples of network nodes include Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), core network nodes (e.g., Mobile Switching Centers (MSCs), Mobility Management Entities (MMEs)), Operation and Maintenance (O&M) nodes, Operations Support System (OSS) nodes, Self-Organizing Network (SON) nodes, positioning nodes (e.g., Evolved Serving Mobile Location Center (E-SMLCs)), and/or Minimization of Drive Tests (MDTs). As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 6, the network node 660 includes processing circuitry 670, a device readable medium 680, an interface 690, auxiliary equipment 684, a power source 686, power circuitry 687, and an antenna 662. Although the network node 660 illustrated in the example wireless network of Figure 6 may represent a device that includes the illustrated combination of hardware components, other embodiments may comprise network nodes with different combinations of components. It is to be understood that a network node comprises any suitable combination of hardware and/or software needed to perform the tasks, features, functions, and methods disclosed herein. Moreover, while the components of the network node 660 are depicted as single boxes located within a larger box, or nested within multiple boxes, in practice, a network node may comprise multiple different physical components that make up a single illustrated component (e.g., the device readable medium 680 may comprise multiple separate hard drives as well as multiple Random Access Memory (RAM) modules).

Similarly, the network node 660 may be composed of multiple physically separate components (e.g., a Node B component and a RNC component, or a BTS component and a BSC component, etc.), which may each have their own respective components. In certain scenarios in which the network node 660 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 660 may be configured to support multiple Radio Access Technologies (RATs). In such embodiments, some components may be duplicated (e.g., a separate device readable medium 680 for the different RATs) and some components may be reused (e.g., the same antenna 662 may be shared by the RATs). The network node 660 may also include multiple sets of the various illustrated components for different wireless technologies integrated into the network node 660, such as, for example, GSM, Wideband Code Division Multiple Access (WCDMA), LTE, NR, WiFi, or Bluetooth wireless technologies. These wireless technologies may be integrated into the same or a different chip or set of chips and other components within the network node 660.

The processing circuitry 670 is configured to perform any determining, calculating, or similar operations (e.g., certain obtaining operations) described herein as being provided by a network node. These operations performed by the processing circuitry 670 may include processing information obtained by the processing circuitry 670 by, for example, converting the obtained information into other information, comparing the obtained information or converted information to information stored in the network node, and/or performing one or more operations based on the obtained information or converted information, and as a result of said processing making a determination.

The processing circuitry 670 may comprise a combination of one or more of a microprocessor, a controller, a microcontroller, a Central Processing Unit (CPU), a Digital Signal Processor (DSP), an Application Specific Integrated Circuit (ASIC), a Field Programmable Gate Array (FPGA), or any other suitable computing device, resource, or combination of hardware, software, and/or encoded logic operable to provide, either alone or in conjunction with other network node 660 components, such as the device readable medium 680, network node 660 functionality. For example, the processing circuitry 670 may execute instructions stored in the device readable medium 680 or in memory within the processing circuitry 670. Such functionality may include providing any of the various wireless features, functions, or benefits discussed herein. In some embodiments, the processing circuitry 670 may include a System on a Chip (SOC).

In some embodiments, the processing circuitry 670 may include one or more of Radio Frequency (RF) transceiver circuitry 672 and baseband processing circuitry 674. In some embodiments, the RF transceiver circuitry 672 and the baseband processing circuitry 674 may be on separate chips (or sets of chips), boards, or units, such as radio units and digital units. In alternative embodiments, part or all of the RF transceiver circuitry 672 and the baseband processing circuitry 674 may be on the same chip or set of chips, boards, or units.

In certain embodiments, some or all of the functionality described herein as being provided by a network node, base station, eNB, or other such network device may be performed by the processing circuitry 670 executing instructions stored on the device readable medium 680 or memory within the processing circuitry 670. In alternative embodiments, some or all of the functionality may be provided by the processing circuitry 670 without executing instructions stored on a separate or discrete device readable medium, such as in a hard-wired manner. In any of those embodiments, whether executing instructions stored on a device readable storage medium or not, the processing circuitry 670 can be configured to perform the described functionality. The benefits provided by such functionality are not limited to the processing circuitry 670 alone or to other components of the network node 660, but are enjoyed by the network node 660 as a whole, and/or by end users and the wireless network generally.

The device readable medium 680 may comprise any form of volatile or non-volatile computer readable memory including, without limitation, persistent storage, solid state memory, remotely mounted memory, magnetic media, optical media, RAM, Read Only Memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by the processing circuitry 670. The device readable medium 680 may store any suitable instructions; data or information, including a computer program; software; an application including one or more of logic, rules, code, tables, etc.; and/or other instructions capable of being executed by the processing circuitry 670 and utilized by the network node 660. The device readable medium 680 may be used to store any calculations made by the processing circuitry 670 and/or any data received via the interface 690. In some embodiments, the processing circuitry 670 and the device readable medium 680 may be considered to be integrated.

The interface 690 is used in the wired or wireless communication of signaling and/or data between the network node 660, a network 606, and/or WDs 610. As illustrated, the interface 690 comprises port(s)/terminal(s) 694 to send and receive data, for example to and from the network 606 over a wired connection. The interface 690 also includes radio front end circuitry 692 that may be coupled to, or in certain embodiments a part of, the antenna 662. The radio front end circuitry 692 comprises filters 698 and amplifiers 696. The radio front end circuitry 692 may be connected to the antenna 662 and the processing circuitry 670. The radio front end circuitry 692 may be configured to condition signals communicated between the antenna 662 and the processing circuitry 670. The radio front end circuitry 692 may receive digital data that is to be sent out to other network nodes or WDs via a wireless connection. The radio front end circuitry 692 may convert the digital data into a radio signal having the appropriate channel and bandwidth parameters using a combination of the filters 698 and/or the amplifiers 696. The radio signal may then be transmitted via the antenna 662. Similarly, when receiving data, the antenna 662 may collect radio signals which are then converted into digital data by the radio front end circuitry 692. The digital data may be passed to the processing circuitry 670. In other embodiments, the interface 690 may comprise different components and/or different combinations of components.

In certain alternative embodiments, the network node 660 may not include separate radio front end circuitry 692; instead, the processing circuitry 670 may comprise radio front end circuitry and may be connected to the antenna 662 without separate radio front end circuitry 692. Similarly, in some embodiments, all or some of the RF transceiver circuitry 672 may be considered a part of the interface 690. In still other embodiments, the interface 690 may include the one or more ports or terminals 694, the radio front end circuitry 692, and the RF transceiver circuitry 672 as part of a radio unit (not shown), and the interface 690 may communicate with the baseband processing circuitry 674, which is part of a digital unit (not shown).

The antenna 662 may include one or more antennas, or antenna arrays, configured to send and/or receive wireless signals. The antenna 662 may be coupled to the radio front end circuitry 692 and may be any type of antenna capable of transmitting and receiving data and/or signals wirelessly. In some embodiments, the antenna 662 may comprise one or more omni-directional, sector, or panel antennas operable to transmit/receive radio signals between, for example, 2 gigahertz (GHz) and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as Multiple Input Multiple Output (MIMO). In certain embodiments, the antenna 662 may be separate from the network node 660 and may be connectable to the network node 660 through an interface or port.

The antenna 662, the interface 690, and/or the processing circuitry 670 may be configured to perform any receiving operations and/or certain obtaining operations described herein as being performed by a network node. Any information, data, and/or signals may be received from a WD, another network node, and/or any other network equipment. Similarly, the antenna 662, the interface 690, and/or the processing circuitry 670 may be configured to perform any transmitting operations described herein as being performed by a network node. Any information, data, and/or signals may be transmitted to a WD, another network node, and/or any other network equipment.

The power circuitry 687 may comprise, or be coupled to, power management circuitry and is configured to supply the components of the network node 660 with power for performing the functionality described herein. The power circuitry 687 may receive power from the power source 686. The power source 686 and/or the power circuitry 687 may be configured to provide power to the various components of the network node 660 in a form suitable for the respective components (e.g., at a voltage and current level needed for each respective component). The power source 686 may either be included in, or be external to, the power circuitry 687 and/or the network node 660. For example, the network node 660 may be connectable to an external power source (e.g., an electricity outlet) via an input circuitry or interface such as an electrical cable, whereby the external power source supplies power to the power circuitry 687. As a further example, the power source 686 may comprise a source of power in the form of a battery or battery pack which is connected to, or integrated in, the power circuitry 687. The battery may provide backup power should the external power source fail. Other types of power sources, such as photovoltaic devices, may also be used.

Alternative embodiments of the network node 660 may include additional components beyond those shown in Figure 6 that may be responsible for providing certain aspects of the network node's functionality, including any of the functionality described herein and/or any functionality necessary to support the subject matter described herein. For example, the network node 660 may include user interface equipment to allow input of information into the network node 660 and to allow output of information from the network node 660. This may allow a user to perform diagnostic, maintenance, repair, and other administrative functions for the network node 660.

As used herein, WD refers to a device capable, configured, arranged, and/or operable to communicate wirelessly with network nodes and/or other WDs. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a Voice over IP (VoIP) phone, a wireless local loop phone, a desktop computer, a Personal Digital Assistant (PDA), a wireless camera, a gaming console or device, a music storage device, a playback appliance, a wearable terminal device, a wireless endpoint, a mobile station, a tablet, a laptop, Laptop Embedded Equipment (LEE), Laptop Mounted Equipment (LME), a smart device, a wireless Customer Premise Equipment (CPE), a vehicle mounted wireless terminal device, etc.. A WD may support Device-to-Device (D2D) communication, for example by implementing a 3GPP standard for sidelink communication, Vehicle-to-Vehicle (V2V), Vehicle-to-Infrastructure (V2I), Vehicle-to-Everything (V2X), and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a Machine-to-Machine (M2M) device, which may in a 3GPP context be referred to as a Machine-Type Communication (MTC) device. As one particular example, the WD may be a UE implementing the 3GPP Narrowband IoT (NB-IoT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated in Figure 6, a WD 610 includes an antenna 611, an interface 614, processing circuitry 620, a device readable medium 630, user interface equipment 632, auxiliary equipment 634, a power source 636, and power circuitry 637. The WD 610 may include multiple sets of one or more of the illustrated components for different wireless technologies supported by the WD 610, such as, for example, GSM, WCDMA, LTE, NR, WiFi, WiMAX, or Bluetooth wireless technologies, just to mention a few. These wireless technologies may be integrated into the same or different chips or set of chips as other components within the WD 610.

The antenna 611 may include one or more antennas or antenna arrays configured to send and/or receive wireless signals and is connected to the interface 614. In certain alternative embodiments, the antenna 611 may be separate from the WD 610 and be connectable to the WD 610 through an interface or port. The antenna 611, the interface 614, and/or the processing circuitry 620 may be configured to perform any receiving or transmitting operations described herein as being performed by a WD. Any information, data, and/or signals may be received from a network node and/or another WD. In some embodiments, radio front end circuitry and/or the antenna 611 may be considered an interface.

As illustrated, the interface 614 comprises radio front end circuitry 612 and the antenna 611. The radio front end circuitry 612 comprises one or more filters 618 and amplifiers 616. The radio front end circuitry 612 is connected to the antenna 611 and the processing circuitry 620 and is configured to condition signals communicated between the antenna 611 and the processing circuitry 620. The radio front end circuitry 612 may be coupled to or be a part of the antenna 611. In some embodiments, the WD 610 may not include separate radio front end circuitry 612; rather, the processing circuitry 620 may comprise radio front end circuitry and may be connected to the antenna 611. Similarly, in some embodiments, some or all of RF transceiver circuitry 622 may be considered a part of the interface 614. The radio front end circuitry 612 may receive digital data that is to be sent out to other network nodes or WDs via a wireless connection. The radio front end circuitry 612 may convert the digital data into a radio signal having the appropriate channel and bandwidth parameters using a combination of the filters 618 and/or the amplifiers 616. The radio signal may then be transmitted via the antenna 611. Similarly, when receiving data, the antenna 611 may collect radio signals which are then converted into digital data by the radio front end circuitry 612. The digital data may be passed to the processing circuitry 620. In other embodiments, the interface 614 may comprise different components and/or different combinations of components.

The processing circuitry 620 may comprise a combination of one or more of a microprocessor, a controller, a microcontroller, a CPU, a DSP, an ASIC, a FPGA, or any other suitable computing device, resource, or combination of hardware, software, and/or encoded logic operable to provide, either alone or in conjunction with other WD 610 components, such as the device readable medium 630, WD 610 functionality. Such functionality may include providing any of the various wireless features or benefits discussed herein. For example, the processing circuitry 620 may execute instructions stored in the device readable medium 630 or in memory within the processing circuitry 620 to provide the functionality disclosed herein.

As illustrated, the processing circuitry 620 includes one or more of the RF transceiver circuitry 622, baseband processing circuitry 624, and application processing circuitry 626. In other embodiments, the processing circuitry 620 may comprise different components and/or different combinations of components. In certain embodiments, the processing circuitry 620 of the WD 610 may comprise a SOC. In some embodiments, the RF transceiver circuitry 622, the baseband processing circuitry 624, and the application processing circuitry 626 may be on separate chips or sets of chips. In alternative embodiments, part or all of the baseband processing circuitry 624 and the application processing circuitry 626 may be combined into one chip or set of chips, and the RF transceiver circuitry 622 may be on a separate chip or set of chips. In still alternative embodiments, part or all of the RF transceiver circuitry 622 and the baseband processing circuitry 624 may be on the same chip or set of chips, and the application processing circuitry 626 may be on a separate chip or set of chips. In yet other alternative embodiments, part or all of the RF transceiver circuitry 622, the baseband processing circuitry 624, and the application processing circuitry 626 may be combined in the same chip or set of chips. In some embodiments, the RF transceiver circuitry 622 may be a part of the interface 614. The RF transceiver circuitry 622 may condition RF signals for the processing circuitry 620.

In certain embodiments, some or all of the functionality described herein as being performed by a WD may be provided by the processing circuitry 620 executing instructions stored on the device readable medium 630, which in certain embodiments may be a computer-readable storage medium. In alternative embodiments, some or all of the functionality may be provided by the processing circuitry 620 without executing instructions stored on a separate or discrete device readable storage medium, such as in a hard-wired manner. In any of those particular embodiments, whether executing instructions stored on a device readable storage medium or not, the processing circuitry 620 can be configured to perform the described functionality. The benefits provided by such functionality are not limited to the processing circuitry 620 alone or to other components of the WD 610, but are enjoyed by the WD 610 as a whole, and/or by end users and the wireless network generally.

The processing circuitry 620 may be configured to perform any determining, calculating, or similar operations (e.g., certain obtaining operations) described herein as being performed by a WD. These operations, as performed by the processing circuitry 620, may include processing information obtained by the processing circuitry 620 by, for example, converting the obtained information into other information, comparing the obtained information or converted information to information stored by the WD 610, and/or performing one or more operations based on the obtained information or converted information, and as a result of said processing making a determination.

The device readable medium 630 may be operable to store a computer program; software; an application including one or more of logic, rules, code, tables, etc.; and/or other instructions capable of being executed by the processing circuitry 620. The device readable medium 630 may include computer memory (e.g., RAM or ROM), mass storage media (e.g., a hard disk), removable storage media (e.g., a CD or a DVD), and/or any other volatile or non-volatile, non-transitory device readable and/or computer executable memory devices that store information, data, and/or instructions that may be used by the processing circuitry 620. In some embodiments, the processing circuitry 620 and the device readable medium 630 may be considered to be integrated.

The user interface equipment 632 may provide components that allow for a human user to interact with the WD 610. Such interaction may be of many forms, such as visual, audial, tactile, etc. The user interface equipment 632 may be operable to produce output to the user and to allow the user to provide input to the WD 610. The type of interaction may vary depending on the type of user interface equipment 632 installed in the WD 610. For example, if the WD 610 is a smart phone, the interaction may be via a touch screen; if the WD 610 is a smart meter, the interaction may be through a screen that provides usage (e.g., the number of gallons used) or a speaker that provides an audible alert (e.g., if smoke is detected). The user interface equipment 632 may include input interfaces, devices and circuits, and output interfaces, devices and circuits. The user interface equipment 632 is configured to allow input of information into the WD 610, and is connected to the processing circuitry 620 to allow the processing circuitry 620 to process the input information. The user interface equipment 632 may include, for example, a microphone, a proximity or other sensor, keys/buttons, a touch display, one or more cameras, a Universal Serial Bus (USB) port, or other input circuitry. The user interface equipment 632 is also configured to allow output of information from the WD 610 and to allow the processing circuitry 620 to output information from the WD 610. The user interface equipment 632 may include, for example, a speaker, a display, vibrating circuitry, a USB port, a headphone interface, or other output circuitry. Using one or more input and output interfaces, devices, and circuits of the user interface equipment 632, the WD 610 may communicate with end users and/or the wireless network, and allow them to benefit from the functionality described herein.

The auxiliary equipment 634 is operable to provide more specific functionality which may not be generally performed by WDs. This may comprise specialized sensors for doing measurements for various purposes, interfaces for additional types of communication such as wired communications, etc. The inclusion and type of components of the auxiliary equipment 634 may vary depending on the embodiment and/or scenario.

The power source 636 may, in some embodiments, be in the form of a battery or battery pack. Other types of power sources, such as an external power source (e.g., an electricity outlet), photovoltaic devices, or power cells may also be used. The WD 610 may further comprise the power circuitry 637 for delivering power from the power source 636 to the various parts of the WD 610 which need power from the power source 636 to carry out any functionality described or indicated herein. The power circuitry 637 may in certain embodiments comprise power management circuitry. The power circuitry 637 may additionally or alternatively be operable to receive power from an external power source, in which case the WD 610 may be connectable to the external power source (such as an electricity outlet) via input circuitry or an interface such as an electrical power cable. The power circuitry 637 may also in certain embodiments be operable to deliver power from an external power source to the power source 636. This may be, for example, for the charging of the power source 636. The power circuitry 637 may perform any formatting, converting, or other modification to the power from the power source 636 to make the power suitable for the respective components of the WD 610 to which power is supplied.

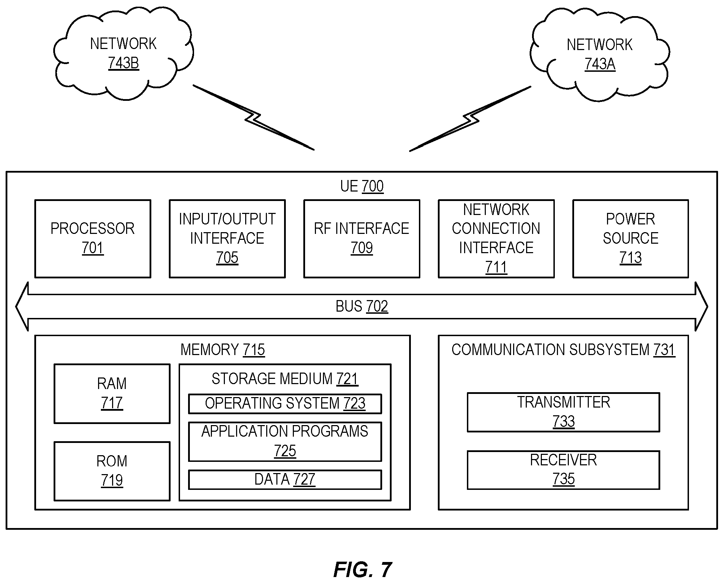

Figure 7 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). A UE 700 may be any UE identified by 3GPP, including a NB-IoT UE, a MTC UE, and/or an enhanced MTC (eMTC) UE. The UE 700, as illustrated in Figure 7, is one example of a WD configured for communication in accordance with one or more communication standards promulgated by 3GPP, such as 3GPP's GSM, UMTS, LTE, and/or 5G standards. As mentioned previously, the term WD and UE may be used interchangeable. Accordingly, although Figure 7 is a UE, the components discussed herein are equally applicable to a WD, and vice-versa.

In Figure 7, the UE 700 includes processing circuitry 701 that is operatively coupled to an input/output interface 705, an RF interface 709, a network connection interface 711, memory 715 including RAM 717, ROM 719, and a storage medium 721 or the like, a communication subsystem 731, a power source 713, and/or any other component, or any combination thereof. The storage medium 721 includes an operating system 723, an application program 725, and data 727. In other embodiments, the storage medium 721 may include other similar types of information. Certain UEs may utilize all of the components shown in Figure 7, or only a subset of the components. The level of integration between the components may vary from one UE to another UE. Further, certain UEs may contain multiple instances of a component, such as multiple processors, memories, transceivers, transmitters, receivers, etc.

In Figure 7, the processing circuitry 701 may be configured to process computer instructions and data. The processing circuitry 701 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored programs, general purpose processors, such as a microprocessor or DSP, together with appropriate software; or any combination of the above. For example, the processing circuitry 701 may include two CPUs. Data may be information in a form suitable for use by a computer.

In the depicted embodiment, the input/output interface 705 may be configured to provide a communication interface to an input device, output device, or input and output device. The UE 700 may be configured to use an output device via the input/output interface 705. An output device may use the same type of interface port as an input device. For example, a USB port may be used to provide input to and output from the UE 700. The output device may be a speaker, a sound card, a video card, a display, a monitor, a printer, an actuator, an emitter, a smartcard, another output device, or any combination thereof. The UE 700 may be configured to use an input device via the input/output interface 705 to allow a user to capture information into the UE 700. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 7, the RF interface 709 may be configured to provide a communication interface to RF components such as a transmitter, a receiver, and an antenna. The network connection interface 711 may be configured to provide a communication interface to a network 743A. The network 743A may encompass wired and/or wireless networks such as a LAN, a WAN, a computer network, a wireless network, a telecommunications network, another like network or any combination thereof. For example, the network 743A may comprise a WiFi network. The network connection interface 711 may be configured to include a receiver and a transmitter interface used to communicate with one or more other devices over a communication network according to one or more communication protocols, such as Ethernet, Transmission Control Protocol (TCP) / IP, Synchronous Optical Networking (SONET), Asynchronous Transfer Mode (ATM), or the like. The network connection interface 711 may implement receiver and transmitter functionality appropriate to the communication network links (e.g., optical, electrical, and the like). The transmitter and receiver functions may share circuit components, software, or firmware, or alternatively may be implemented separately.

The RAM 717 may be configured to interface via a bus 702 to the processing circuitry 701 to provide storage or caching of data or computer instructions during the execution of software programs such as the operating system, application programs, and device drivers. The ROM 719 may be configured to provide computer instructions or data to the processing circuitry 701. For example, the ROM 719 may be configured to store invariant low-level system code or data for basic system functions such as basic Input and Output (I/O), startup, or reception of keystrokes from a keyboard that are stored in a non-volatile memory. The storage medium 721 may be configured to include memory such as RAM, ROM, Programmable ROM (PROM), Erasable PROM (EPROM), Electrically EPROM (EEPROM), magnetic disks, optical disks, floppy disks, hard disks, removable cartridges, or flash drives. In one example, the storage medium 721 may be configured to include the operating system 723, the application program 725 such as a web browser application, a widget or gadget engine, or another application, and the data file 727. The storage medium 721 may store, for use by the UE 700, any of a variety of various operating systems or combinations of operating systems.

The storage medium 721 may be configured to include a number of physical drive units, such as a Redundant Array of Independent Disks (RAID), a floppy disk drive, flash memory, a USB flash drive, an external hard disk drive, a thumb drive, a pen drive, a key drive, a High-Density Digital Versatile Disc (HD-DVD) optical disc drive, an internal hard disk drive, a Blu-Ray optical disc drive, a Holographic Digital Data Storage (HDDS) optical disc drive, an external mini-Dual In-Line Memory Module (DIMM), Synchronous Dynamic RAM (SDRAM), external micro-DIMM SDRAM, smartcard memory such as a Subscriber Identity Module (SIM) or a Removable User Identity (RUIM) module, other memory, or any combination thereof. The storage medium 721 may allow the UE 700 to access computer-executable instructions, application programs, or the like, stored on transitory or non-transitory memory media, to off-load data or to upload data. An article of manufacture, such as one utilizing a communication system, may be tangibly embodied in the storage medium 721, which may comprise a device readable medium.

In Figure 7, the processing circuitry 701 may be configured to communicate with a network 743B using the communication subsystem 731. The network 743A and the network 743B may be the same network or networks or different network or networks. The communication subsystem 731 may be configured to include one or more transceivers used to communicate with the network 743B. For example, the communication subsystem 731 may be configured to include one or more transceivers used to communicate with one or more remote transceivers of another device capable of wireless communication such as another WD, UE, or base station of a Radio Access Network (RAN) according to one or more communication protocols, such as IEEE 802.7, Code Division Multiple Access (CDMA), WCDMA, GSM, LTE, Universal Terrestrial RAN (UTRAN), WiMax, or the like. Each transceiver may include a transmitter 733 and/or a receiver 735 to implement transmitter or receiver functionality, respectively, appropriate to the RAN links (e.g., frequency allocations and the like). Further, the transmitter 733 and the receiver 735 of each transceiver may share circuit components, software, or firmware, or alternatively may be implemented separately.

In the illustrated embodiment, the communication functions of the communication subsystem 731 may include data communication, voice communication, multimedia communication, short-range communications such as Bluetooth, near-field communication, location-based communication such as the use of the Global Positioning System (GPS) to determine a location, another like communication function, or any combination thereof. For example, the communication subsystem 731 may include cellular communication, WiFi communication, Bluetooth communication, and GPS communication. The network 743B may encompass wired and/or wireless networks such as a LAN, a WAN, a computer network, a wireless network, a telecommunications network, another like network, or any combination thereof. For example, the network 743B may be a cellular network, a WiFi network, and/or a near-field network. A power source 713 may be configured to provide Alternating Current (AC) or Direct Current (DC) power to components of the UE 700.

The features, benefits, and/or functions described herein may be implemented in one of the components of the UE 700 or partitioned across multiple components of the UE 700. Further, the features, benefits, and/or functions described herein may be implemented in any combination of hardware, software, or firmware. In one example, the communication subsystem 731 may be configured to include any of the components described herein. Further, the processing circuitry 701 may be configured to communicate with any of such components over the bus 702. In another example, any of such components may be represented by program instructions stored in memory that, when executed by the processing circuitry 701, perform the corresponding functions described herein. In another example, the functionality of any of such components may be partitioned between the processing circuitry 701 and the communication subsystem 731. In another example, the non-computationally intensive functions of any of such components may be implemented in software or firmware and the computationally intensive functions may be implemented in hardware.

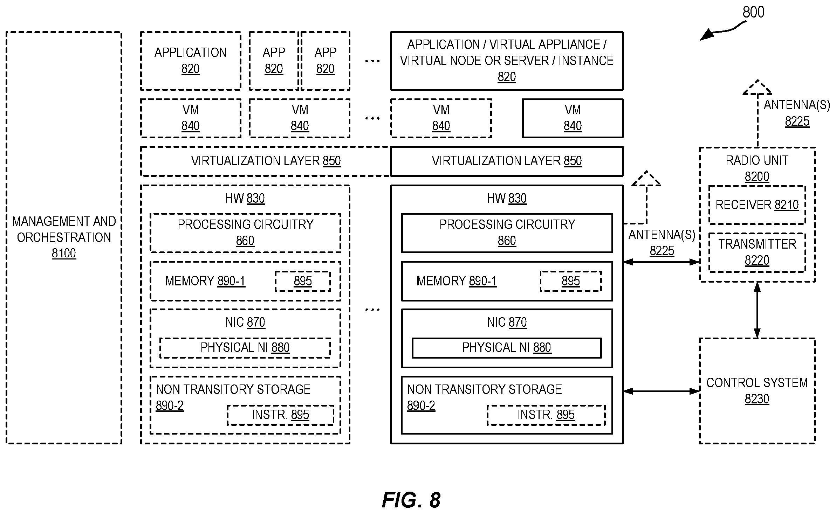

Figure 8 is a schematic block diagram illustrating a virtualization environment 800 in which functions implemented by some embodiments may be virtualized. In the present context, virtualizing means creating virtual versions of apparatuses or devices which may include virtualizing hardware platforms, storage devices, and networking resources. As used herein, virtualization can be applied to a node (e.g., a virtualized base station or a virtualized radio access node) or to a device (e.g., a UE, a WD, or any other type of communication device) or components thereof and relates to an implementation in which at least a portion of the functionality is implemented as one or more virtual components (e.g., via one or more applications, components, functions, virtual machines, or containers executing on one or more physical processing nodes in one or more networks).

In some embodiments, some or all of the functions described herein may be implemented as virtual components executed by one or more virtual machines implemented in one or more virtual environments 800 hosted by one or more of hardware nodes 830. Further, in embodiments in which the virtual node is not a radio access node or does not require radio connectivity (e.g., a core network node), then the network node may be entirely virtualized.

The functions may be implemented by one or more applications 820 (which may alternatively be called software instances, virtual appliances, network functions, virtual nodes, virtual network functions, etc.) operative to implement some of the features, functions, and/or benefits of some of the embodiments disclosed herein. The applications 820 are run in the virtualization environment 800 which provides hardware 830 comprising processing circuitry 860 and memory 890. The memory 890 contains instructions 895 executable by the processing circuitry 860 whereby the application 820 is operative to provide one or more of the features, benefits, and/or functions disclosed herein.

The virtualization environment 800 comprises general-purpose or special-purpose network hardware devices 830 comprising a set of one or more processors or processing circuitry 860, which may be Commercial Off-the-Shelf (COTS) processors, dedicated ASICs, or any other type of processing circuitry including digital or analog hardware components or special purpose processors. Each hardware device 830 may comprise memory 890-1 which may be non-persistent memory for temporarily storing instructions 895 or software executed by the processing circuitry 860. Each hardware device 830 may comprise one or more Network Interface Controllers (NICs) 870, also known as network interface cards, which include a physical network interface 880. Each hardware device 830 may also include non-transitory, persistent, machine-readable storage media 890-2 having stored therein software 895 and/or instructions executable by the processing circuitry 860. The software 895 may include any type of software including software for instantiating one or more virtualization layers 850 (also referred to as hypervisors), software to execute virtual machines 840, as well as software allowing it to execute functions, features, and/or benefits described in relation with some embodiments described herein.

The virtual machines 840, comprise virtual processing, virtual memory, virtual networking or interface, and virtual storage, and may be run by a corresponding virtualization layer 850 or hypervisor. Different embodiments of the instance of virtual appliance 820 may be implemented on one or more of the virtual machines 840, and the implementations may be made in different ways.

During operation, the processing circuitry 860 executes the software 895 to instantiate the hypervisor or virtualization layer 850, which may sometimes be referred to as a Virtual Machine Monitor (VMM). The virtualization layer 850 may present a virtual operating platform that appears like networking hardware to the virtual machine 840.

As shown in Figure 8, the hardware 830 may be a standalone network node with generic or specific components. The hardware 830 may comprise an antenna 8225 and may implement some functions via virtualization. Alternatively, the hardware 830 may be part of a larger cluster of hardware (e.g., such as in a data center or CPE) where many hardware nodes work together and are managed via a Management and Orchestration (MANO) 8100, which, among others, oversees lifecycle management of the applications 820.

Virtualization of the hardware is in some contexts referred to as Network Function Virtualization (NFV). NFV may be used to consolidate many network equipment types onto industry standard high volume server hardware, physical switches, and physical storage, which can be located in data centers and CPE.

In the context of NFV, the virtual machine 840 may be a software implementation of a physical machine that runs programs as if they were executing on a physical, non-virtualized machine. Each of the virtual machines 840, and that part of the hardware 830 that executes that virtual machine 840, be it hardware dedicated to that virtual machine 840 and/or hardware shared by that virtual machine 840 with others of the virtual machines 840, forms a separate Virtual Network Element (VNE).

Still in the context of NFV, Virtual Network Function (VNF) is responsible for handling specific network functions that run in one or more virtual machines 840 on top of the hardware networking infrastructure 830 and corresponds to the application 820 in Figure 8.

In some embodiments, one or more radio units 8200 that each include one or more transmitters 8220 and one or more receivers 8210 may be coupled to the one or more antennas 8225. The radio units 8200 may communicate directly with the hardware nodes 830 via one or more appropriate network interfaces and may be used in combination with the virtual components to provide a virtual node with radio capabilities, such as a radio access node or a base station.

In some embodiments, some signaling can be effected with the use of a control system 8230, which may alternatively be used for communication between the hardware nodes 830 and the radio unit 8200.

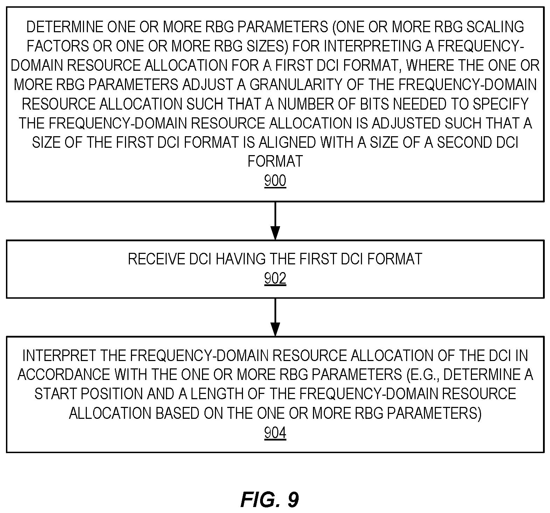

Figure 9 is a flow chart that illustrates the operation of a WD (e.g., UE) in accordance with at least some aspects of the embodiments described herein. As illustrated, the WD operates to provide DCI format size alignment between a first DCI format (e.g., a new DCI format for, e.g., URLLC) and a second DCI format (e.g., a fallback DCI format such as, e.g., DCI format 0-0 or 1-0). In order to do so, the WD determines one or more RBG parameters for interpreting a frequency-domain resource allocation for the first DCI format (step 900). As described above, the one or more RBG parameters are either: (a) one or more RBG scaling factors (M and/or N) or (b) one or more RBG sizes. As discussed above, the one or more RBG parameters adjust a granularity of the frequency-domain resource allocation for the first DCI format such that a number of bits needed to specify the frequency-domain resource allocation is adjusted such that a size of the first DCI format is aligned with a size of the second DCI format. The WD receives DCI having the first DCI format (step 902) and interprets the frequency-domain resource allocation of the DCI in accordance with the one or more RBG parameters (step 904).

As discussed above, in some embodiments, when excluding the frequency-domain resource allocation, an increase of a bit size of the first DCI format as compared to the second DCI format is L-K bits, where: K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format. In some embodiments, the one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

As discussed above, in some embodiments, when interpreting the frequency-domain resource allocation of the DCI, the WD interprets the frequency-domain resource allocation of the DCI in accordance with the one or more RBG parameters together with a frequency-domain size of a corresponding BWP. As discussed above, in some embodiments, the corresponding BWP is either a corresponding initial BWP or a corresponding active BWP, of the wireless device.

As discussed above, in some embodiments, the one or more RBG parameters comprise a first RBG parameter, where the first RBG parameter is either: (a) a first scaling factor (M) related to a starting position of the frequency-domain resource allocation or (b) a first RBG size related to the starting position of the frequency-domain resource allocation. Further, as discussed above, in some embodiments, interpreting the frequency-domain resource allocation of the DCI comprises determining the starting position of the frequency-domain resource allocation based on the first RBG parameter. Further, as described above, in some embodiments, determining the starting position of the frequency-domain resource allocation based on the first RBG parameter comprises determining the starting position of the frequency-domain resource allocation in units of a first RBG, where a size of the first RBG is either: (a) M PRBs or (b) the first RBG size. As discussed above, in some embodiments, the one or more RBG parameters comprise a second RBG parameter, where the second RBG parameter is either: (a) a second scaling factor (N) related to a length of the frequency-domain resource allocation or (b) a second RBG size related to the length of the frequency-domain resource allocation. As discussed above, in some embodiments, interpreting the frequency-domain resource allocation of the DCI comprises determining the length of the frequency-domain resource allocation based on the second RBG parameter. As discussed above, in some embodiments, determining the length of the frequency-domain resource allocation based on the second RBG parameter comprises determining the length of the frequency-domain resource allocation in units of a second RBG, where a size of the second RBG is either: (a) N PRBs or (b) the second RBG size. As discussed above, in some embodiments, the frequency-domain resource allocation provides a RIV that is mapped to the starting position and the length of the frequency-domain resource allocation based on the first RBG parameter and the second RBG parameter, respectively. As discussed above, in some embodiments, the first scaling factor (M) is equal to the second scaling factor (N), and the number of bits needed to represent the RIV is:

$$\left\lceil log_2\left(\frac{N_{RB}^{BWP}}{M}\left(\frac{N_{RB}^{BWP}}{M}+1\right)/2\right)\right\rceil$$

where $N_{RB}^{BWP}$ is the number of PRBs in the corresponding BWP. As discussed above, in some embodiments, the first RBG parameter and the second RBG parameter are separate parameters. As discussed above, in some embodiments, the first RBG parameter and the second RBG parameter either: (a) are equal or (b) are the same parameter. As discussed above, in some embodiments, the first RBG parameter and the second RBG parameter have a value equal to $2^{\left(\frac{L-K}{2}\right)}$ where, when excluding the frequency-domain resource allocation: K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format.

As discussed above, in some embodiments, the DCI comprises one or more padding bits for DCI size alignment.

As discussed above, determining the one or more RBG parameters comprises receiving, from the base station, information that configures the one or more RBG parameters. As discussed above, in some embodiments, receiving the information that configures the one or more RBG parameters comprises receiving the information via a semi-static configuration.

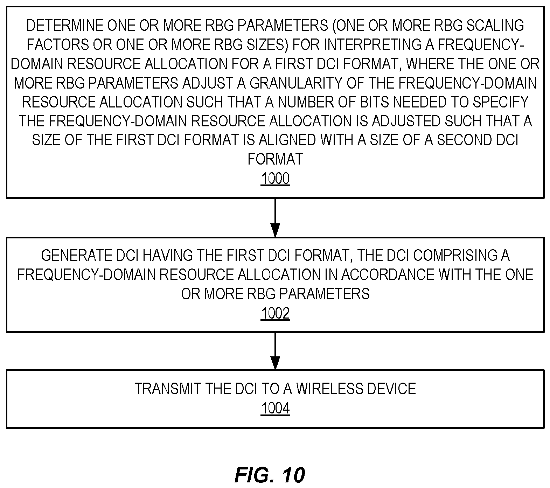

Figure 10 is a flow chart that illustrates the operation of a network node (e.g., base station) in accordance with at least some aspects of the embodiments described herein. As illustrated, the network node operates to provide DCI format size alignment between a first DCI format (e.g., a new DCI format for, e.g., URLLC) and a second DCI format (e.g., a fallback DCI format such as, e.g., DCI format 0-0 or 1-0). In order to do so, the network node determines one or more RBG parameters for interpreting a frequency-domain resource allocation for the first DCI format (step 1000). As described above, the one or more RBG parameters are either: (a) one or more RBG scaling factors (M and/or N) or (b) one or more RBG sizes. As discussed above, the one or more RBG parameters adjust a granularity of the frequency-domain resource allocation for the first DCI format such that a number of bits needed to specify the frequency-domain resource allocation is adjusted such that a size of the first DCI format is aligned with a size of the second DCI format. The network node generates DCI having the first DCI format, where the DCI comprises a frequency-domain resource allocation in accordance with the one or more RBG parameters (step 1002). The network node transmits the DCI to a wireless device (step 1004).

As discussed above, in some embodiments, when excluding the frequency-domain resource allocation, an increase of a bit size of the first DCI format as compared to the second DCI format is a L-K bits, where K is a bit reduction value that corresponds to a number of bits included in one or more fields in the second DCI format that are either bit reduced or excluded in the first DCI format, and L is a bit increase value that corresponds to a number of bits included in one or more fields in the first DCI format that are added to the first DCI format as compared to the second DCI format. The one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

As discussed above, in some embodiments, the frequency-domain resource allocation of the DCI is provided in accordance with the one or more RBG parameters together with a frequency-domain size of a corresponding BWP. As discussed above, in some embodiments, the corresponding BWP is either a corresponding initial BWP or a corresponding active BWP, of the wireless device.

As discussed above, in some embodiments, the one or more RBG parameters comprise a first RBG parameter, where the first RBG parameter is either: (a) a first scaling factor (M) related to a starting position of the frequency-domain resource allocation or (b) a first RBG size related to the starting position of the frequency-domain resource allocation. The starting position of the frequency-domain resource allocation is based on the first RBG parameter. As discussed above, in some embodiments, the starting position of the frequency-domain resource allocation is provided in units of a first RBG, where a size of the first RBG is either: (a) M PRBs or (b) the first RBG size. As discussed above, in some embodiments, the one or more RBG parameters comprise a second RBG parameter, where the second RBG parameter is either: (a) a second scaling factor (N) related to a length of the frequency-domain resource allocation or (b) a second RBG size related to the length of the frequency-domain resource allocation. The length of the frequency-domain resource allocation is based on the second RBG parameter. As discussed above, in some embodiments, the length of the frequency-domain resource allocation is provided in units of a second RBG, where a size of the second RBG is either: (a) N PRBs or (b) the second RBG size. As discussed above, in some embodiments, the frequency-domain resource allocation provides a RIV that is mapped to the starting position and the length of the frequency-domain resource allocation based on the first RBG parameter and the second RBG parameter, respectively. As discussed above, in some embodiments, the first scaling factor (M) is equal to the second scaling factor (N), and the number of bits needed to represent the RIV is:

$$\left\lceil log_2(\frac{N_{RB}^{BWP}}{M}(\frac{N_{RB}^{BWP}}{M}+1)/2) \right\rceil$$

where $N_{RB}^{BWP}$ is the number of PRBs in the corresponding BWP. As discussed above, in some embodiments, the first RBG parameter and the second RBG parameter are separate parameters. As discussed above, in some embodiments, the first RBG parameter and the second RBG parameter either: (a) are equal or (b) are the same parameter. As discussed above, in some embodiments, the first RBG parameter and the second RBG parameter have a value equal to $2^{\left(\frac{L-K}{2}\right)}$ where, when excluding the frequency-domain resource allocation: K is a bit reduction value that corresponds to a number of bits included in one or more fields in the second DCI format that are either bit reduced or excluded in the first DCI format, and L is bit increase value that corresponds to a number of bits included in one or more fields in the first DCI format that are added to the first DCI format as compared to the second DCI format.

As discussed above, in some embodiments, the DCI comprises one or more padding bits for DCI size alignment.

As discussed above, determining the one or more RBG parameters comprises determining the one or more RBG parameters at the base station. As discussed above, in some embodiments, determining the one or more RBG parameters at the base station comprises dynamically determining the one or more RBG parameters at the base station.

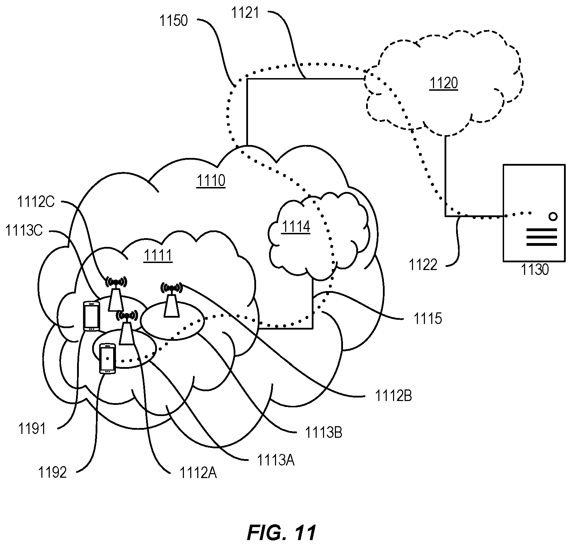

With reference to Figure 11, in accordance with an embodiment, a communication system includes a telecommunication network 1110, such as a 3GPP-type cellular network, which comprises an access network 1111, such as a RAN, and a core network 1114. The access network 1111 comprises a plurality of base stations 1112A, 1112B, 1112C, such as Node Bs, eNBs, gNBs, or other types of wireless APs, each defining a corresponding coverage area 1113A, 1113B, 1113C. Each base station 1112A, 1112B, 1112C is connectable to the core network 1114 over a wired or wireless connection 1115. A first UE 1191 located in coverage area 1113C is configured to wirelessly connect to, or be paged by, the corresponding base station 1112C. A second UE 1192 in coverage area 1113A is wirelessly connectable to the corresponding base station 1112A. While a plurality of UEs 1191, 1192 are illustrated in this example, the disclosed embodiments are equally applicable to a situation where a sole UE is in the coverage area or where a sole UE is connecting to the corresponding base station 1112.

The telecommunication network 1110 is itself connected to a host computer 1130, which may be embodied in the hardware and/or software of a standalone server, a cloud-implemented server, a distributed server, or as processing resources in a server farm. The host computer 1130 may be under the ownership or control of a service provider, or may be operated by the service provider or on behalf of the service provider. Connections 1121 and 1122 between telecommunication network 1110 and the host computer 1130 may extend directly from the core network 1114 to the host computer 1130 or may go via an optional intermediate network 1120. The intermediate network 1120 may be one of, or a combination of more than one of, a public, private, or hosted network; the intermediate network 1120, if any, may be a backbone network or the Internet; in particular, the intermediate network 1120 may comprise two or more sub-networks (not shown).

The communication system of Figure 11 as a whole enables connectivity between the connected UEs 1191, 1192 and the host computer 1130. The connectivity may be described as an Over-the-Top (OTT) connection 1150. The host computer 1130 and the connected UEs 1191, 1192 are configured to communicate data and/or signaling via the OTT connection 1150, using the access network 1111, the core network 1114, any intermediate network 1120, and possible further infrastructure (not shown) as intermediaries. The OTT connection 1150 may be transparent in the sense that the participating communication devices through which the OTT connection 1150 passes are unaware of routing of uplink and downlink communications. For example, the base station 1112 may not or need not be informed about the past routing of an incoming downlink communication with data originating from the host computer 1130 to be forwarded (e.g., handed over) to a connected UE 1191. Similarly, the base station 1112 need not be aware of the future routing of an outgoing uplink communication originating from the UE 1191 towards the host computer 1130.

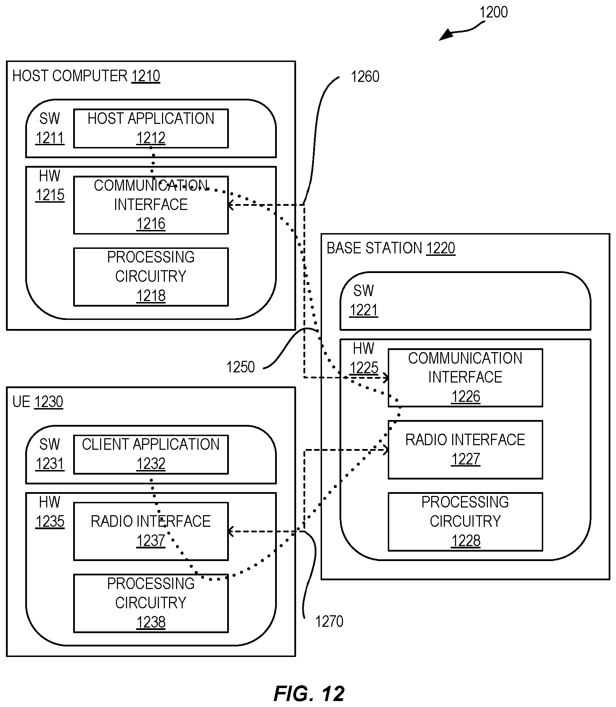

Example implementations, in accordance with an embodiment, of the UE, base station, and host computer discussed in the preceding paragraphs will now be described with reference to Figure 12. In a communication system 1200, a host computer 1210 comprises hardware 1215 including a communication interface 1216 configured to set up and maintain a wired or wireless connection with an interface of a different communication device of the communication system 1200. The host computer 1210 further comprises processing circuitry 1218, which may have storage and/or processing capabilities. In particular, the processing circuitry 1218 may comprise one or more programmable processors, ASICs, FPGAs, or combinations of these (not shown) adapted to execute instructions. The host computer 1210 further comprises software 1211, which is stored in or accessible by the host computer 1210 and executable by the processing circuitry 1218. The software 1211 includes a host application 1212. The host application 1212 may be operable to provide a service to a remote user, such as a UE 1230 connecting via an OTT connection 1250 terminating at the UE 1230 and the host computer 1210. In providing the service to the remote user, the host application 1212 may provide user data which is transmitted using the OTT connection 1250.

The communication system 1200 further includes a base station 1220 provided in a telecommunication system and comprising hardware 1225 enabling it to communicate with the host computer 1210 and with the UE 1230. The hardware 1225 may include a communication interface 1226 for setting up and maintaining a wired or wireless connection with an interface of a different communication device of the communication system 1200, as well as a radio interface 1227 for setting up and maintaining at least a wireless connection 1270 with the UE 1230 located in a coverage area (not shown in Figure 12) served by the base station 1220. The communication interface 1226 may be configured to facilitate a connection 1260 to the host computer 1210. The connection 1260 may be direct or it may pass through a core network (not shown in Figure 12) of the telecommunication system and/or through one or more intermediate networks outside the telecommunication system. In the embodiment shown, the hardware 1225 of the base station 1220 further includes processing circuitry 1228, which may comprise one or more programmable processors, ASICs, FPGAs, or combinations of these (not shown) adapted to execute instructions. The base station 1220 further has software 1221 stored internally or accessible via an external connection.

The communication system 1200 further includes the UE 1230 already referred to. The UE's 1230 hardware 1235 may include a radio interface 1237 configured to set up and maintain a wireless connection 1270 with a base station serving a coverage area in which the UE 1230 is currently located. The hardware 1235 of the UE 1230 further includes processing circuitry 1238, which may comprise one or more programmable processors, ASICs, FPGAs, or combinations of these (not shown) adapted to execute instructions. The UE 1230 further comprises software 1231, which is stored in or accessible by the UE 1230 and executable by the processing circuitry 1238. The software 1231 includes a client application 1232. The client application 1232 may be operable to provide a service to a human or non-human user via the UE 1230, with the support of the host computer 1210. In the host computer 1210, the executing host application 1212 may communicate with the executing client application 1232 via the OTT connection 1250 terminating at the UE 1230 and the host computer 1210. In providing the service to the user, the client application 1232 may receive request data from the host application 1212 and provide user data in response to the request data. The OTT connection 1250 may transfer both the request data and the user data. The client application 1232 may interact with the user to generate the user data that it provides.

It is noted that the host computer 1210, the base station 1220, and the UE 1230 illustrated in Figure 12 may be similar or identical to the host computer 1130, one of the base stations 1112A, 1112B, 1112C, and one of the UEs 1191, 1192 of Figure 11, respectively. This is to say, the inner workings of these entities may be as shown in Figure 12 and independently, the surrounding network topology may be that of Figure 11.

In Figure 12, the OTT connection 1250 has been drawn abstractly to illustrate the communication between the host computer 1210 and the UE 1230 via the base station 1220 without explicit reference to any intermediary devices and the precise routing of messages via these devices. The network infrastructure may determine the routing, which may be configured to hide from the UE 1230 or from the service provider operating the host computer 1210, or both. While the OTT connection 1250 is active, the network infrastructure may further take decisions by which it dynamically changes the routing (e.g., on the basis of load balancing consideration or reconfiguration of the network).

The wireless connection 1270 between the UE 1230 and the base station 1220 is in accordance with the teachings of the embodiments described throughout this disclosure. One or more of the various embodiments improve the performance of OTT services provided to the UE 1230 using the OTT connection 1250, in which the wireless connection 1270 forms the last segment. More precisely, the teachings of these embodiments may improve the latency and lower error rates and thereby provide benefits such as providing reduced user waiting time, added flexibility regarding DCI size, better responsiveness and more efficient battery operation and extended battery lifetime.

A measurement procedure may be provided for the purpose of monitoring data rate, latency, and other factors on which the one or more embodiments improve. There may further be an optional network functionality for reconfiguring the OTT connection 1250 between the host computer 1210 and the UE 1230, in response to variations in the measurement results. The measurement procedure and/or the network functionality for reconfiguring the OTT connection 1250 may be implemented in the software 1211 and the hardware 1215 of the host computer 1210 or in the software 1231 and the hardware 1235 of the UE 1230, or both. In some embodiments, sensors (not shown) may be deployed in or in association with communication devices through which the OTT connection 1250 passes; the sensors may participate in the measurement procedure by supplying values of the monitored quantities exemplified above, or supplying values of other physical quantities from which the software 1211, 1231 may compute or estimate the monitored quantities. The reconfiguring of the OTT connection 1250 may include message format, retransmission settings, preferred routing, etc.; the reconfiguring need not affect the base station 1220, and it may be unknown or imperceptible to the base station 1220. Such procedures and functionalities may be known and practiced in the art. In certain embodiments, measurements may involve proprietary UE signaling facilitating the host computer 1210's measurements of throughput, propagation times, latency, and the like. The measurements may be implemented in that the software 1211 and 1231 causes messages to be transmitted, in particular empty or 'dummy' messages, using the OTT connection 1250 while it monitors propagation times, errors, etc.

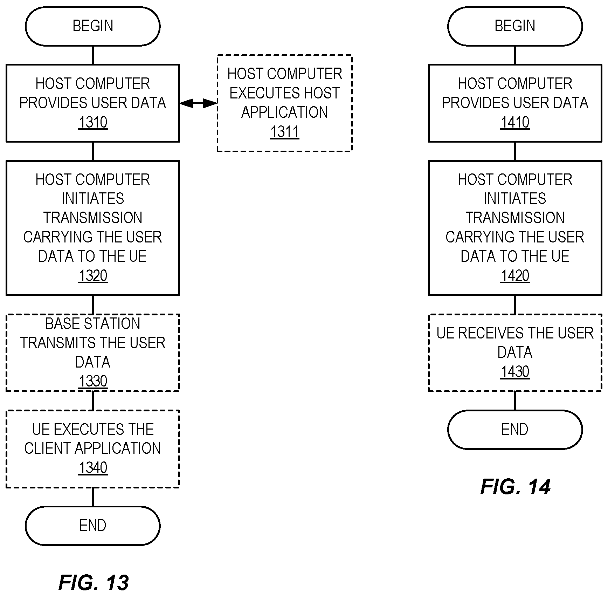

Figure 13 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 13 will be included in this section. In step 1310, the host computer provides user data. In sub-step 1311 (which may be optional) of step 1310, the host computer provides the user data by executing a host application. In step 1320, the host computer initiates a transmission carrying the user data to the UE. In step 1330 (which may be optional), the base station transmits to the UE the user data which was carried in the transmission that the host computer initiated, in accordance with the teachings of the embodiments described throughout this disclosure. In step 1340 (which may also be optional), the UE executes a client application associated with the host application executed by the host computer.

Figure 14 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 14 will be included in this section. In step 1410 of the method, the host computer provides user data. In an optional sub-step (not shown) the host computer provides the user data by executing a host application. In step 1420, the host computer initiates a transmission carrying the user data to the UE. The transmission may pass via the base station, in accordance with the teachings of the embodiments described throughout this disclosure. In step 1430 (which may be optional), the UE receives the user data carried in the transmission.

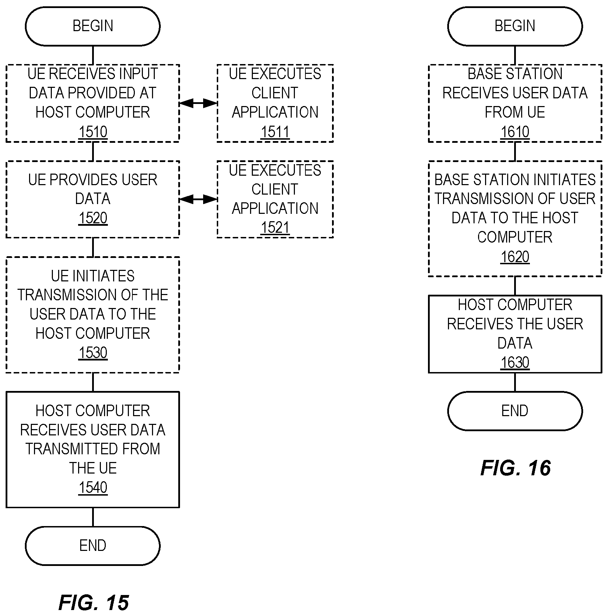

Figure 15 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 15 will be included in this section. In step 1510 (which may be optional), the UE receives input data provided by the host computer. Additionally or alternatively, in step 1520, the UE provides user data. In sub-step 1521 (which may be optional) of step 1520, the UE provides the user data by executing a client application. In sub-step 1511 (which may be optional) of step 1510, the UE executes a client application which provides the user data in reaction to the received input data provided by the host computer. In providing the user data, the executed client application may further consider user input received from the user. Regardless of the specific manner in which the user data was provided, the UE initiates, in sub-step 1530 (which may be optional), transmission of the user data to the host computer. In step 1540 of the method, the host computer receives the user data transmitted from the UE, in accordance with the teachings of the embodiments described throughout this disclosure.

Figure 16 is a flowchart illustrating a method implemented in a communication system, in accordance with one embodiment. The communication system includes a host computer, a base station, and a UE which may be those described with reference to Figures 11 and 12. For simplicity of the present disclosure, only drawing references to Figure 16 will be included in this section. In step 1610 (which may be optional), in accordance with the teachings of the embodiments described throughout this disclosure, the base station receives user data from the UE. In step 1620 (which may be optional), the base station initiates transmission of the received user data to the host computer. In step 1630 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include DSPs, special-purpose digital logic, and the like. The processing circuitry may be configured to execute program code stored in memory, which may include one or several types of memory such as ROM, RAM, cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

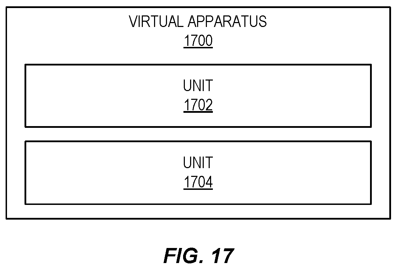

Figure 17 illustrates a schematic block diagram of an apparatus 1700 in a wireless network (for example, the wireless network shown in Figure 6). The apparatus may be implemented in a wireless device or network node (e.g., the WD 610 or the network node 660 shown in Figure 6). The apparatus 1700 is operable to carry out any processes or methods disclosed herein.

The virtual apparatus 1700 may be a wireless device such as a UE and may comprise processing circuitry, which may include one or more microprocessor or microcontrollers, as well as other digital hardware, which may include DSPs, special-purpose digital logic, and the like. The processing circuitry may be configured to execute program code stored in memory, which may include one or several types of memory such as ROM, RAM, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause any suitable units of the apparatus 1700 to perform corresponding functions according one or more embodiments of the present disclosure.

The term unit may have conventional meaning in the field of electronics, electrical devices, and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 2G | Second Generation |
| • 3G | Third Generation |
| • 3GPP | Third Generation Partnership Project |
| • 4G | Fourth Generation |
| • 5G | Fifth Generation |
| • AC | Alternating Current |
| • AP | Access Point |
| • ASIC | Application Specific Integrated Circuit |

(continued)

| | |
|---|---|
| • ATM | Asynchronous Transfer Mode |
| • BS | Base Station |
| • BSC | Base Station Controller |
| • BTS | Base Transceiver Station |
| • BWP | Bandwidth Part |
| • CD | Compact Disk |
| • CDMA | Code Division Multiple Access |
| • CORESET | Control Region Set |
| • COTS | Commercial Off-the-Shelf |
| • CPE | Customer Premise Equipment |
| • CPU | Central Processing Unit |
| • CRC | Cyclic Redundancy Check |
| • C-RNTI | Cell Radio Network Temporary Identifier |
| • CSS | Common Search Space |
| • D2D | Device-to-Device |
| • DAS | Distributed Antenna System |
| • DC | Direct Current |
| • DCI | Downlink Control Information |
| • DIMM | Dual In-Line Memory Module |
| • DL | Downlink |
| • DSP | Digital Signal Processor |
| • DVD | Digital Video Disk |
| • EEPROM | Electrically Erasable Programmable Read Only Memory |
| • eMTC | Enhanced Machine-Type Communication |
| • eNB | Evolved Node B |
| • EPROM | Erasable Programmable Read Only Memory |
| • E-SMLC | Evolved Serving Mobile Location Center |
| • FPGA | Field Programmable Gate Array |
| • GHz | Gigahertz |
| • gNB | New Radio Node B |
| • GPS | Global Positioning System |
| • GSM | Global System for Mobile Communications |
| • HARQ | Hybrid Automatic Repeat Request |
| • HDDS | Holographic Digital Data Storage |
| • HD-DVD | High-Density Digital Versatile Disc |
| • I/O | Input and Output |
| • IoT | Internet of Things |
| • IP | Internet Protocol |
| • LAN | Local Area Network |
| • LEE | Laptop Embedded Equipment |
| • LME | Laptop Mounted Equipment |
| • LTE | Long Term Evolution |
| • M2M | Machine-to-Machine |
| • MCE | Multi-Cell/Multicast Coordination Entity |
| • MCS | Modulation and Coding Scheme |
| • MDT | Minimization of Drive Tests |
| • MIMO | Multiple Input Multiple Output |
| • MME | Mobility Management Entity |
| • MSC | Mobile Switching Center |
| • MSR | Multi-Standard Radio |
| • MTC | Machine-Type Communication |
| • NB-IoT | Narrowband Internet of Things |

(continued)

| | |
|---|---|
| • NFV | Network Function Virtualization |
| • NIC | Network Interface Controller |
| • NR | New Radio |
| • O&M | Operation and Maintenance |
| • OSS | Operations Support System |
| • OTT | Over-the-Top |
| • PDA | Personal Digital Assistant |
| • PDCCH | Physical Downlink Control Channel |
| • PDSCH | Physical Downlink Shared Channel |
| • PRB | Physical Resource Block |
| • PROM | Programmable Read Only Memory |
| • PSTN | Public Switched Telephone Networks |
| • PUSCH | Physical Uplink Shared Channel |
| • RA | Resource Allocation |
| • RAID | Redundant Array of Independent Disks |
| • RAM | Random Access Memory |
| • RAN | Radio Access Network |
| • RAT | Radio Access Technology |
| • RB | Resource Block |
| • RBG | Resource Block Group |
| • RF | Radio Frequency |
| • RIV | Resource Indication Value |
| • RNC | Radio Network Controller |
| • ROM | Read Only Memory |
| • RRH | Remote Radio Head |
| • RRU | Remote Radio Unit |
| • RUIM | Removable User Identity |
| • RV | Redundancy Version |
| • SDRAM | Synchronous Dynamic Random Access Memory |
| • SIM | Subscriber Identity Module |
| • SOC | System on a Chip |
| • SON | Self-Organizing Network |
| • SONET | Synchronous Optical Networking |
| • TCP | Transmission Control Protocol |
| • TS | Technical Specification |
| • UE | User Equipment |
| • UL | Uplink |
| • UMTS | Universal Mobile Telecommunications System |
| • URLLC | Ultra-Reliable Low-Latency Communication |
| • USB | Universal Serial Bus |
| • USS | User Equipment-Specific Search Space |
| • UTRAN | Universal Terrestrial Radio Access Network |
| • V2I | Vehicle-to-Infrastructure |
| • V2V | Vehicle-to-Vehicle |
| • V2X | Vehicle-to-Everything |
| • VMM | Virtual Machine Monitor |
| • VNE | Virtual Network Element |
| • VNF | Virtual Network Function |
| • VoIP | Voice over Internet Protocol |
| • WAN | Wide Area Network |
| • WCDMA | Wideband Code Division Multiple Access |
| • WD | Wireless Device |

(continued)

| | |
|---|---|
| • WiMax | Worldwide Interoperability for Microwave Access |
| • WLAN | Wireless Local Area Network |

Those skilled in the art will recognize improvements and modifications to the embodiments of the present disclosure. All such improvements and modifications are considered within the scope of the concepts disclosed herein.

**Claims**

1. A method of operation of a wireless device to provide Downlink Control Information, DCI, format size alignment between a first DCI format and a second DCI format, comprising:

   • determining (900) one or more Resource Block Group, RBG, parameters for interpreting a frequency-domain resource allocation for the first DCI format, wherein:

      ◦ the one or more RBG parameters are either: one or more RBG scaling factors or one or more RBG sizes;
      ◦ the one or more RBG parameters adjust a granularity of the frequency-domain resource allocation such that a number of bits needed to specify the frequency-domain resource allocation is adjusted such that a size of the first DCI format is aligned with a size of the second DCI format;
      ◦ the first DCI format is different to the second DCI format; and
      ◦ determining the one or more RBG parameters comprises receiving, from a base station, information that configures the one or more RBG parameters;

   • receiving (902) DCI having the first DCI format; and
   • interpreting (904) the frequency-domain resource allocation of the DCI in accordance with the one or more RBG parameters.

2. The method of claim 1 wherein:

   • when excluding the frequency-domain resource allocation, an increase of a bit size of the first DCI format as compared to the second DCI format is L-K bits, where:

      ◦ K is a bit reduction value that corresponds to a number of bits included in one or more fields in the second DCI format that are either bit reduced or excluded in the first DCI format; and
      ◦ L is a bit increase value that corresponds to a number of bits included in one or more fields in the first DCI format that are added to the first DCI format as compared to the second DCI format; and

   • the one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

3. The method of claim 1 or 2 wherein interpreting the frequency-domain resource allocation of the DCI comprises interpreting the frequency-domain resource allocation of the DCI in accordance with the one or more RBG parameters together with a frequency-domain size of a corresponding bandwidth part.

4. The method of any one of claims 1 to 3 wherein:

   • the one or more RBG parameters comprise a first RBG parameter, the first RBG parameter being either: a first scaling factor, M, related to a starting position of the frequency-domain resource allocation or a first RBG size related to the starting position of the frequency-domain resource allocation;
   interpreting (904) the frequency-domain resource allocation of the DCI comprises determining (904) the starting position of the frequency-domain resource allocation based on the first RBG parameter; and
   • determining (904) the starting position of the frequency-domain resource allocation based on the first RBG parameter comprises determining the starting position of the frequency-domain resource allocation in units of a first RBG, where a size of the first RBG is either: M Physical Resource Blocks, PRBs, or the first RBG size.

5. The method of claim 4 wherein:

• the one or more RBG parameters comprise a second RBG parameter, the second RBG parameter being either: a second scaling factor, N, related to a length of the frequency-domain resource allocation or a second RBG size related to the length of the frequency-domain resource allocation;
• interpreting (904) the frequency-domain resource allocation of the DCI comprises determining (904) the length of the frequency-domain resource allocation based on the second RBG parameter; and
• determining (904) the length of the frequency-domain resource allocation based on the second RBG parameter comprises determining the length of the frequency-domain resource allocation in units of a second RBG, where a size of the second RBG is either: N PRBs or the second RBG size.

6. The method of claim 5 wherein the frequency-domain resource allocation provides a Resource Indication Value, RIV, that is mapped to the starting position and the length of the frequency-domain resource allocation based on the first RBG parameter and the second RBG parameter, respectively.

7. The method of claim 6 wherein the first scaling factor (M) is equal to the second scaling factor (N), and the number of bits needed to represent the RIV is:

$$\left\lceil log_2(\frac{N_{RB}^{BWP}}{M}(\frac{N_{RB}^{BWP}}{M}+1)/2) \right\rceil$$

where $N_{RB}^{BWP}$ is the number of PRBs in the corresponding bandwidth part.

8. The method of claim 5 or 6 wherein the: first RBG parameter and the second RBG parameter either: are equal or are the same parameter; and wherein the first RBG parameter and the second RBG parameter have a value equal to

$2^{\left(\frac{L-K}{2}\right)}$ where, when excluding the frequency-domain resource allocation:

K is a bit reduction value that corresponds to a number of bits included in one or more fields in the second DCI format that are either bit reduced or excluded in the first DCI format; and
L is a bit increase value that corresponds to a number of bits included in one or more fields in the first DCI format that are added to the first DCI format as compared to the second DCI format.

9. A wireless device for providing Downlink Control Information, DCI, format size alignment between a first DCI format and a second DCI format, the wireless device adapted to perform the method according to any one of the preceding claims.

10. A method of operation of a base station to provide Downlink Control Information, DCI, format size alignment between a first DCI format and a second DCI format, comprising:

• determining (1000) one or more Resource Block Group, RBG, parameters for interpreting a frequency-domain resource allocation for the first DCI format, wherein:

  ○ the one or more RBG parameters are either: one or more RBG scaling factors or one or more RBG sizes;
  ○ the one or more RBG parameters adjust a granularity of the frequency-domain resource allocation such that a number of bits needed to specify the frequency-domain resource allocation is adjusted such that a size of the first DCI format is aligned with a size of the second DCI format;
  ○ the first DCI format is different to the second DCI format; and
  ○ determining the one or more RBG parameters comprises determining the one or more RBG parameters at the base station;

• sending, to a wireless device, information that configures the one or more RBG parameters;
• generating (1002) DCI having the first DCI format, the DCI comprising a frequency-domain resource allocation in accordance with the one or more RBG parameters; and
• transmitting (1004) the DCI to the wireless device.

11. The method of claim 10 wherein:

> • when excluding the frequency-domain resource allocation, an increase of a bit size of the first DCI format as compared to the second DCI format is L-K bits, where:

>> ∘ K is a bit reduction value that corresponds to a number of bits included in one or more fields in the second DCI format that are either bit reduced or excluded in the first DCI format; and
>> ∘ L is a bit increase value that corresponds to a number of bits included in one or more fields in the first DCI format that are added to the first DCI format as compared to the second DCI format; and

> • the one or more RBG parameters adjust the granularity of the frequency-domain resource allocation for the first DCI format such that the number of bits needed to specify the frequency-domain resource allocation for the first DCI format is reduced as compared to that needed to specify a frequency-domain resource allocation for the second DCI format by an amount that is greater than or equal to L-K bits.

12. The method of claim 10 or 11 wherein the frequency-domain resource allocation of the DCI is provided in accordance with the one or more RBG parameters together with a frequency-domain size of a corresponding bandwidth part.

13. The method of any one of claims 10 to 12 wherein:

> • the one or more RBG parameters comprise a first RBG parameter, the first RBG parameter being either: a first scaling factor, M, related to a starting position of the frequency-domain resource allocation or a first RBG size related to the starting position of the frequency-domain resource allocation;
> • the starting position of the frequency-domain resource allocation is based on the first RBG parameter; and
> • the starting position of the frequency-domain resource allocation is provided in units of a first RBG, where a size of the first RBG is either: M Physical Resource Blocks, PRBs, or the first RBG size.

14. The method of claim 13 wherein:

> • the one or more RBG parameters comprise a second RBG parameter, the second RBG parameter being either: a second scaling factor, N, related to a length of the frequency-domain resource allocation or a second RBG size related to the length of the frequency-domain resource allocation;
> • the length of the frequency-domain resource allocation is based on the second RBG parameter; and
> • the length of the frequency-domain resource allocation is provided in units of a second RBG, where a size of the second RBG is either: N PRBs or the second RBG size.

15. The method of claim 14 wherein the frequency resource allocation provides a Resource Indication Value, RIV, that is mapped to the starting position and the length of the frequency-domain resource allocation based on the first RBG parameter and the second RBG parameter, respectively.

16. The method of claim 15 wherein the first scaling factor (M) is equal to the second scaling factor (N), and the number of bits needed to represent the RIV is:

$$\left\lceil log_2\left(\frac{N_{RB}^{BWP}}{M}\left(\frac{N_{RB}^{BWP}}{M}+1\right)/2\right)\right\rceil$$

where $N_{RB}^{BWP}$ is the number of PRBs in the corresponding bandwidth part.

17. The method of claim 14 or 15 wherein the first RBG parameter and the second RBG parameter either: are equal or are the same parameter; and wherein the first RBG parameter and the second RBG parameter have a value equal to $2^{\left(\frac{L-K}{2}\right)}$ where, when excluding the frequency-domain resource allocation:

> K is a bit reduction value that corresponds to a number of bits included in one or more fields in the second DCI format that are either bit reduced or excluded in the first DCI format; and
> L is a bit increase value that corresponds to a number of bits included in one or more fields in the first DCI format that are added to the first DCI format as compared to the second DCI format.

18. A base station for providing Downlink Control Information, DCI, format size alignment between a first DCI format and a second DCI format, the base station adapted to perform the method according to any one of claims 10 - 17.

**Patentansprüche**

1. Betriebsverfahren für eine drahtlose Vorrichtung zum Bereitstellen einer Größenangleichung von Formaten von Downlink-Steuerinformationen, DCI, zwischen einem ersten zweiten DCI-Format und einem zweiten DCI-Format, umfassend:

   • Bestimmen (900) eines oder mehrerer Ressourcenblockgruppenparameter, RBG-Parameter, zum Interpretieren einer Frequenzdomänenressourcenzuweisung für das erste DCI-Format, wobei:

      ◦ es sich bei dem einen oder den mehreren RBG-Parametern entweder um einen oder mehrere RBG-Skalierungsfaktoren oder eine oder mehrere RBG-Größen handelt;
      ◦ der eine oder die mehreren Parameter eine Granularität der Frequenzdomänenressourcenzuweisung derart anpassen, dass eine Anzahl von Bits, die zum Spezifizieren der Frequenzdomänenressourcenzuweisung benötigt wird, derart angepasst wird, dass eine Größe des ersten DCI-Formats einer Größe des zweiten DCI-Formats angeglichen wird;
      ◦ das erste DCI-Format von dem zweiten DCI-Format verschieden ist; und
      ◦ das Bestimmen des einen oder der mehreren RBG-Parameter Empfangen von Informationen, die den einen oder die mehreren RGB-Parameter konfigurieren, von einer Basisstation umfasst;

   • Empfangen (902) von DCI mit dem ersten DCI-Format; und
   • Interpretieren (904) der Frequenzdomänenressourcenzuweisung der DCI gemäß dem einen oder den mehreren RBG-Parametern.

2. Verfahren nach Anspruch 1, wobei:

   • bei Ausschluss der Frequenzdomänenressourcenzuweisung eine Erhöhung der Bitgröße des ersten DCI-Formats im Vergleich zum zweiten DCI-Format L - K Bit beträgt; wobei:

      ◦ K ein Bitreduktionswert ist, der einer Anzahl von Bits entspricht, die in einem oder mehreren Feldern in dem zweiten DCI-Format enthalten sind und die in dem ersten DCI-Format entweder bitreduziert oder ausgeschlossen sind; und
      ◦ L ein Biterhöhungswert ist, der einer Anzahl von Bits entspricht, die in einem oder mehreren Feldern in dem ersten DCI-Format enthalten sind und die dem ersten DCI-Format im Vergleich zu dem zweiten DCI-Format hinzugefügt werden; und

   • der eine oder die mehreren RBG-Parameter die Granularität der Frequenzdomänenressourcenzuweisung für das erste DCI-Format derart anpassen, dass die Anzahl von Bits, die zum Spezifizieren der Frequenzdomänenressourcenzuweisung für das erste DCI-Format benötigt wird, im Vergleich zu der, die zum Spezifizieren einer Frequenzdomänenressourcenzuweisung für das zweite DCI-Format benötigt wird, um einen Betrag reduziert wird, der größer oder gleich L - K Bit ist.

3. Verfahren nach Anspruch 1 oder 2, wobei das Interpretieren der Frequenzdomänenressourcenzuweisung der DCI Interpretieren der Frequenzdomänenressourcenzuweisung der DCI gemäß dem einen oder den mehreren RGB-Parametern zusammen mit einer Frequenzdomänengröße eines entsprechenden Bandbreitenteils umfasst.

4. Verfahren nach einem der Ansprüche 1 bis 3, wobei:

   • der eine oder die mehreren RBG-Parameter einen ersten RBG-Parameter umfassen, wobei der erste RBG-Parameter entweder ein erster Skalierungsfaktor M, der mit einer Startposition der Frequenzdomänenressourcenzuweisung in Beziehung steht, oder eine erste RBG-Größe ist, die mit der Startposition der Frequenzdomänenressourcenzuweisung in Beziehung steht;
   • das Interpretieren (904) der Frequenzdomänenressourcenzuweisung der DCI Bestimmen (904) der Startposition der Frequenzdomänenressourcenzuweisung basierend auf dem ersten RBG-Parameter umfasst; und
• das Bestimmen (904) der Startposition der Frequenzdomänenressourcenzuweisung basierend auf dem ersten RBG-Parameter Bestimmen der Startposition der Frequenzdomänenressourcenzuweisung in Einheiten einer ersten RBG umfasst, wobei eine Größe der ersten RBG entweder M physikalische Ressourcenblöcke, PRBs, oder die erste RBG-Größe beträgt.

5. Verfahren nach Anspruch 4, wobei:

• der eine oder die mehreren RBG-Parameter einen zweiten RBG-Parameter umfassen, wobei der zweite RBG-Parameter entweder ein zweiter Skalierungsfaktor N, der mit einer Länge der Frequenzdomänenressourcenzuweisung in Beziehung steht, oder eine zweite RBG-Größe ist, die mit der Länge der Frequenzdomänenressourcenzuweisung in Beziehung steht;
• das Interpretieren (904) der Frequenzdomänenressourcenzuweisung der DCI Bestimmen (904) der Länge der Frequenzdomänenressourcenzuweisung basierend auf dem zweiten RBG-Parameter umfasst; und
• das Bestimmen (904) der Länge der Frequenzdomänenressourcenzuweisung basierend auf dem zweiten RBG-Parameter Bestimmen der Länge der Frequenzdomänenressourcenzuweisung in Einheiten einer zweiten RBG umfasst, wobei eine Größe der zweiten RBG entweder N PRBs oder die zweite RBG-Größe beträgt.

6. Verfahren nach Anspruch 5, wobei die der Frequenzdomänenressourcenzuweisung einen Ressourcenanzeigewert, RIV, umfasst, der der Startposition und der Länge der Frequenzdomänenressourcenzuweisung basierend auf dem ersten RBG-Parameter bzw. dem zweiten RBG-Parameter zugeordnet wird.

7. Verfahren nach Anspruch 6, wobei der erste Skalierungsfaktor (M) gleich dem zweiten Skalierungsfaktor (N) ist und die Anzahl von Bits, die zum Darstellen des RIV benötigt wird, Folgendes beträgt:

$$\left\lceil log_2 \left( \frac{N_{RB}^{BWP}}{M} \left( \frac{N_{RB}^{BWP}}{M} + 1 \right)/2 \right) \right\rceil$$

wobei $N_{RB}^{BWP}$ die Anzahl von PRBs in dem entsprechenden Bandbreitenteil ist.

8. Verfahren nach Anspruch 5 oder 6, wobei der erste RBG-Parameter und der zweite RBG-Parameter entweder gleich sind oder derselbe Parameter sind; und wobei der erste RBG-Parameter und der zweite RBG-Parameter einen Wert gleich $2^{\left( \frac{L-k}{2} \right)}$ aufweisen, wobei bei Ausschluss der Frequenzdomänenressourcenzuweisung:

K ein Bitreduktionswert ist, der einer Anzahl von Bits entspricht, die in einem oder mehreren Feldern in dem zweiten DCI-Format enthalten sind und die in dem ersten DCI-Format entweder bitreduziert oder ausgeschlossen sind; und
L ein Biterhöhungswert ist, der einer Anzahl von Bits entspricht, die in einem oder mehreren Feldern in dem ersten DCI-Format enthalten sind und die dem ersten DCI-Format im Vergleich zu dem zweiten DCI-Format hinzugefügt werden.

9. Drahtlose Vorrichtung zum Bereitstellen einer Größenangleichung von Formaten von Downlink-Steuerinformationen, DCI, zwischen einem ersten zweiten DCI-Format und einem zweiten DCI-Format, wobei die drahtlose Vorrichtung dazu ausgelegt ist, das Verfahren nach einem der vorhergehenden Ansprüche durchzuführen.

10. Betriebsverfahren für eine drahtlose Vorrichtung zum Bereitstellen einer Größenangleichung von Formaten von Downlink-Steuerinformationen, DCI, zwischen einem ersten zweiten DCI-Format und einem zweiten DCI-Format, umfassend:

• Bestimmen (1000) eines oder mehrerer Ressourcenblockgruppenparameter, RBG-Parameter, zum Interpretieren einer Frequenzdomänenressourcenzuweisung für das erste DCI-Format, wobei:

◦ es sich bei dem einen oder den mehreren RBG-Parametern entweder um einen oder mehrere RBG-Skalierungsfaktoren oder eine oder mehrere RBG-Größen handelt;
◦ der eine oder die mehreren Parameter eine Granularität der Frequenzdomänenressourcenzuweisung derart anpassen, dass eine Anzahl von Bits, die zum Spezifizieren der Frequenzdomänenressourcenzuweisung benötigt wird, derart angepasst wird, dass eine Größe des ersten DCI-Formats einer Größe des zweiten DCI-Formats angeglichen wird;

◦ das erste DCI-Format von dem zweiten DCI-Format verschieden ist; und
◦ das Bestimmen des einen oder der mehreren RBG-Parameters Bestimmen des einen oder der mehreren RBG-Parameter an der Basisstation umfasst;

• Senden von Informationen, die den einen oder die mehreren RBG-Parameter konfigurieren, an eine drahtlose Vorrichtung;
• Erzeugen (1002) von DCI mit dem ersten DCI-Format, wobei die DCI eine Frequenzdomänenressourcenzuweisung gemäß dem einen oder den mehreren RBG-Parametern umfassen; und
• Senden (1004) der DCI an die drahtlose Vorrichtung.

11. Verfahren nach Anspruch 10, wobei:

• bei Ausschluss der Frequenzdomänenressourcenzuweisung eine Erhöhung der Bitgröße des ersten DCI-Formats im Vergleich zum zweiten DCI-Format L - K Bit beträgt; wobei:

◦ K ein Bitreduktionswert ist, der einer Anzahl von Bits entspricht, die in einem oder mehreren Feldern in dem zweiten DCI-Format enthalten sind und die in dem ersten DCI-Format entweder bitreduziert oder ausgeschlossen sind; und
◦ L ein Biterhöhungswert ist, der einer Anzahl von Bits entspricht, die in einem oder mehreren Feldern in dem ersten DCI-Format enthalten sind und die dem ersten DCI-Format im Vergleich zu dem zweiten DCI-Format hinzugefügt werden; und

• der eine oder die mehreren RBG-Parameter die Granularität der Frequenzdomänenressourcenzuweisung für das erste DCI-Format derart anpassen, dass die Anzahl von Bits, die zum Spezifizieren der Frequenzdomänenressourcenzuweisung für das erste DCI-Format benötigt wird, im Vergleich zu der, die zum Spezifizieren einer Frequenzdomänenressourcenzuweisung für das zweite DCI-Format benötigt wird, um einen Betrag reduziert wird, der größer oder gleich L - K Bit ist.

12. Verfahren nach Anspruch 10 oder 11, wobei die Frequenzdomänenressourcenzuweisung der DCI gemäß dem einen oder den mehreren RGB-Parametern zusammen mit einer Frequenzdomänengröße eines entsprechenden Bandbreitenteils bereitgestellt wird.

13. Verfahren nach einem der Ansprüche 10 bis 12, wobei:

• der eine oder die mehreren RBG-Parameter einen ersten RBG-Parameter umfassen, wobei der erste RBG-Parameter entweder ein erster Skalierungsfaktor M, der mit einer Startposition der Frequenzdomänenressourcenzuweisung in Beziehung steht, oder eine erste RBG-Größe ist, die mit der Startposition der Frequenzdomänenressourcenzuweisung in Beziehung steht;
• die Startposition der Frequenzdomänenressourcenzuweisung auf dem ersten RBG-Parameter basiert; und
• die Startposition der Frequenzdomänenressourcenzuweisung in Einheiten einer ersten RBG bereitgestellt wird, wobei eine Größe der ersten RBG entweder M physikalische Ressourcenblöcke, PRBs, oder die erste RBG-Größe beträgt.

14. Verfahren nach Anspruch 13, wobei:

• der eine oder die mehreren RBG-Parameter einen zweiten RBG-Parameter umfassen, wobei der zweite RBG-Parameter entweder ein zweiter Skalierungsfaktor N, der mit einer Länge der Frequenzdomänenressourcenzuweisung in Beziehung steht, oder eine zweite RBG-Größe ist, die mit der Länge der Frequenzdomänenressourcenzuweisung in Beziehung steht;
• die Länge der Frequenzdomänenressourcenzuweisung auf dem zweiten RBG-Parameter basiert; und
• die Länge der Frequenzdomänenressourcenzuweisung in Einheiten einer zweiten RBG bereitgestellt wird, wobei eine Größe der zweiten RBG entweder N PRBs oder die zweite RBG-Größe beträgt.

15. Verfahren nach Anspruch 14, wobei die der Frequenzdomänenressourcenzuweisung einen Ressourcenanzeigewert, RIV, umfasst, der der Startposition und der Länge der Frequenzdomänenressourcenzuweisung basierend auf dem ersten RBG-Parameter bzw. dem zweiten RBG-Parameter zugeordnet wird.

**16.** Verfahren nach Anspruch 15, wobei der erste Skalierungsfaktor (M) gleich dem zweiten Skalierungsfaktor (N) ist und die Anzahl von Bits, die zum Darstellen des RIV benötigt wird, Folgendes beträgt:

$$\left\lceil log_2(\frac{N_{RB}^{BWP}}{M}(\frac{N_{RB}^{BWP}}{M}+1)/2)\right\rceil$$

wobei $N_{RB}^{BWP}$ die Anzahl von PRBs in dem entsprechenden Bandbreitenteil ist.

**17.** Verfahren nach Anspruch 14 oder 15, wobei der erste RBG-Parameter und der zweite RBG-Parameter entweder gleich sind oder derselbe Parameter sind; und wobei der erste RBG-Parameter und der zweite RBG-Parameter einen Wert gleich $2^{\left(\frac{L-k}{2}\right)}$ aufweisen, wobei bei Ausschluss der Frequenzdomänenressourcenzuweisung:

K ein Bitreduktionswert ist, der einer Anzahl von Bits entspricht, die in einem oder mehreren Feldern in dem zweiten DCI-Format enthalten sind und die in dem ersten DCI-Format entweder bitreduziert oder ausgeschlossen sind; und

L ein Biterhöhungswert ist, der einer Anzahl von Bits entspricht, die in einem oder mehreren Feldern in dem ersten DCI-Format enthalten sind und die dem ersten DCI-Format im Vergleich zu dem zweiten DCI-Format hinzugefügt werden.

**18.** Basisstation zum Bereitstellen einer Größenangleichung von Formaten von Downlink-Steuerinformationen, DCI, zwischen einem ersten zweiten DCI-Format und einem zweiten DCI-Format, wobei die Basisstation dazu ausgelegt ist, das Verfahren nach einem der Ansprüche 10-17 durchzuführen.

**Revendications**

**1.** Procédé de fonctionnement d'un dispositif sans fil pour fournir un alignement de taille de format d'informations de commande de liaison descendante, DCI, entre un premier format DCI et un deuxième format DCI, comprenant :

• la détermination (900) d'un ou plusieurs paramètres de groupe de blocs de ressources, RBG, pour interpréter une allocation de ressources de domaine fréquentiel pour le premier format DCI, dans lequel :

○ le ou les paramètres RBG sont soit un ou plusieurs facteurs d'échelle RBG soit une ou plusieurs tailles RBG ;
○ le ou les paramètres RBG ajustent une granularité de l'allocation de ressources de domaine fréquentiel de sorte qu'un nombre de bits nécessaires pour spécifier l'allocation de ressources de domaine fréquentiel soit ajusté afin qu'une taille du premier format DCI soit alignée avec une taille du deuxième format DCI ;
○ le premier format DCI est différent du deuxième format DCI ; et
○ la détermination du ou des paramètres RBG comprend la réception, depuis une station de base, d'informations qui configurent le ou les paramètres RBG ;

• la réception (902) de DCI présentant le premier format DCI ; et
• l'interprétation (904) de l'allocation de ressources de domaine fréquentiel des DCI en fonction du ou des paramètres RBG.

**2.** Procédé selon la revendication 1, dans lequel :

• lors de l'exclusion de l'allocation de ressources de domaine fréquentiel, une augmentation d'une taille de bits du premier format DCI par rapport au deuxième format DCI est L-K bits, où :

○ K est une valeur de réduction de bits qui correspond à un nombre de bits inclus dans un ou plusieurs champs dans le deuxième format DCI qui sont soit à réduction de bits soit à exclusion de bits dans le premier format DCI ; et
○ L est une valeur d'augmentation de bits qui correspond à un nombre de bits inclus dans un ou plusieurs champs dans le premier format DCI qui sont ajoutés au premier format DCI par comparaison au deuxième format DCI ; et

• le ou les paramètres RBG ajustent la granularité de l'allocation de ressources de domaine fréquentiel pour le premier format DCI de sorte que le nombre de bits nécessaires pour spécifier l'allocation de ressources de domaine fréquentiel pour le premier format DCI soit réduit par comparaison à ce qui est nécessaire pour spécifier une allocation de ressources de domaine fréquentiel pour le deuxième format DCI d'une quantité supérieure ou égale à L-K bits.

3. Procédé selon la revendication 1 ou 2, dans lequel l'interprétation de l'allocation de ressources de domaine fréquentiel des DCI comprend l'interprétation de l'allocation de ressources de domaine fréquentiel des DCI en fonction du ou des paramètres RBG conjointement avec une taille de domaine fréquentiel d'une partie de bande passante correspondante.

4. Procédé selon l'une quelconque des revendications 1 à 3, dans lequel :

• le ou les paramètres RBG comprennent un premier paramètre RBG, le premier paramètre RBG étant : un premier facteur d'échelle, M, lié à une position de début de l'allocation de ressources de domaine fréquentiel ou une première taille RBG liée à la position de début de l'allocation de ressources de domaine fréquentiel ; l'interprétation (904) de l'allocation de ressources de domaine fréquentiel des DCI comprend la détermination (904) de la position de début de l'allocation de ressources de domaine fréquentiel sur la base du premier paramètre RBG ; et
• la détermination (904) de la position de début de l'allocation de ressources de domaine fréquentiel sur la base du premier paramètre RBG comprend la détermination de la position de début de l'allocation de ressources de domaine fréquentiel en unités d'un premier RBG, où une taille du premier RBG est : M blocs de ressources physiques, PRB, ou la première taille RBG.

5. Procédé selon la revendication 4, dans lequel :

• le ou les paramètres RBG comprennent un deuxième paramètre RBG, le deuxième paramètre RBG étant : un deuxième facteur d'échelle, N, lié à une longueur de l'allocation de ressources de domaine fréquentiel ou une deuxième taille RBG liée à la longueur de l'allocation de ressources de domaine fréquentiel ;
• l'interprétation (904) de l'allocation de ressources de domaine fréquentiel des DCI comprend la détermination (904) de la longueur de l'allocation de ressources de domaine fréquentiel sur la base du deuxième paramètre RBG ; et
• la détermination (904) de la longueur de l'allocation de ressources de domaine fréquentiel sur la base du deuxième paramètre RBG comprend la détermination de la longueur de l'allocation de ressources de domaine fréquentiel en unités d'un deuxième RBG, où une taille du deuxième RBG est : N PRB ou la deuxième taille RBG.

6. Procédé selon la revendication 5, dans lequel l'allocation de ressources de domaine fréquentiel fournit une valeur d'indication de ressources, RIV, qui est mappée à la position de début et à la longueur de l'allocation de ressources de domaine fréquentiel sur la base respectivement du premier paramètre RBG et du deuxième paramètre RBG.

7. Procédé selon la revendication 6, dans lequel le premier facteur d'échelle (M) est égal au deuxième facteur d'échelle (N), et le nombre de bits nécessaires pour représenter le RIV est :

$$\left\lceil \log_2\left( \frac{N_{RB}^{BWP}}{M}\left( \frac{N_{RB}^{BWP}}{M} + 1\right)/2 \right)\right\rceil$$

où $N_{RB}^{BWP}$ est le nombre de PRB dans la partie de bande passante correspondante.

8. Procédé selon la revendication 5 ou 6, dans lequel le premier paramètre RBG et le deuxième paramètre RBG sont égaux ou sont le même paramètre ; et dans lequel le premier paramètre RBG et le deuxième paramètre RBG présentent une valeur égale à $2^{\left(\frac{L-K}{2}\right)}$ où, lors de l'exclusion de l'allocation de ressources de domaine fréquentiel :

K est une valeur de réduction de bits qui correspond à un nombre de bits inclus dans un ou plusieurs champs dans le deuxième format DCI qui sont à réduction de bits ou à exclusion de bits dans le premier format DCI ; et

L est une valeur d'augmentation de bits qui correspond à un nombre de bits inclus dans un ou plusieurs champs dans le premier format DCI qui sont ajoutés au premier format DCI par comparaison au deuxième format DCI.

**9.** Dispositif sans fil pour fournir un alignement de taille de format d'informations de commande de liaison descendante, DCI, entre un premier format DCI et un deuxième format DCI, le dispositif sans fil étant adapté pour réaliser le procédé selon l'une quelconque des revendications précédentes.

**10.** Procédé de fonctionnement d'une station de base pour fournir un alignement de taille de format d'informations de commande de liaison descendante, DCI, entre un premier format DCI et un deuxième format DCI, comprenant :

• la détermination (1000) d'un ou plusieurs paramètres de groupe de blocs de ressources, RBG, pour interpréter une allocation de ressources de domaine fréquentiel pour le premier format DCI, dans lequel :

  ◦ le ou les paramètres RBG sont soit un ou plusieurs facteurs d'échelle RBG soit une ou plusieurs tailles RBG ;
  ◦ le ou les paramètres RBG ajustent une granularité de l'allocation de ressources de domaine fréquentiel de sorte qu'un nombre de bits nécessaires pour spécifier l'allocation de ressources de domaine fréquentiel soit ajusté afin qu'une taille du premier format DCI soit alignée avec une taille du deuxième format DCI ;
  ◦ le premier format DCI est différent du deuxième format DCI ; et
  ◦ la détermination du ou des paramètres RBG comprend la détermination du ou des paramètres RBG au niveau de la station de base ;

• l'envoi, à un dispositif sans fil, d'informations qui configurent le ou les paramètres RBG ;
• la génération (1002) de DCI présentant le premier format DCI, les DCI comprenant une allocation de ressources de domaine fréquentiel en fonction du ou des paramètres RBG ; et
• la transmission (1004) des DCI au dispositif sans fil.

**11.** Procédé selon la revendication 10, dans lequel :

• lors de l'exclusion de l'allocation de ressources de domaine fréquentiel, une augmentation d'une taille de bits du premier format DCI par rapport au deuxième format DCI est L-K bits, où :

  ◦ K est une valeur de réduction de bits qui correspond à un nombre de bits inclus dans un ou plusieurs champs dans le deuxième format DCI qui sont soit à réduction de bits soit à exclusion de bits dans le premier format DCI ; et
  ◦ L est une valeur d'augmentation de bits qui correspond à un nombre de bits inclus dans un ou plusieurs champs dans le premier format DCI qui sont ajoutés au premier format DCI par comparaison au deuxième format DCI ; et

• le ou les paramètres RBG ajustent la granularité de l'allocation de ressources de domaine fréquentiel pour le premier format DCI de sorte que le nombre de bits nécessaires pour spécifier l'allocation de ressources de domaine fréquentiel pour le premier format DCI soit réduit par comparaison à ce qui est nécessaire pour spécifier une allocation de ressources de domaine fréquentiel pour le deuxième format DCI d'une quantité supérieure ou égale à L-K bits.

**12.** Procédé selon la revendication 10 ou 11, dans lequel l'allocation de ressources de domaine fréquentiel des DCI est fournie en fonction du ou des paramètres RBG conjointement avec une taille de domaine fréquentiel d'une partie de bande passante correspondante.

**13.** Procédé selon l'une quelconque des revendications 10 à 12, dans lequel :

• le ou les paramètres RBG comprennent un premier paramètre RBG, le premier paramètre RBG étant : un premier facteur d'échelle, M, lié à une position de début de l'allocation de ressources de domaine fréquentiel ou une première taille RBG liée à la position de début de l'allocation de ressources de domaine fréquentiel ;
• la position de début de l'allocation de ressources de domaine fréquentiel est basée sur le premier paramètre RBG ; et
• la position de début de l'allocation de ressources de domaine fréquentiel est fournie en unités d'un premier RBG, où une taille du premier RBG est : M blocs de ressources physiques, PRB, ou la première taille RBG.

**14.** Procédé selon la revendication 13, dans lequel :

• le ou les paramètres RBG comprennent un deuxième paramètre RBG, le deuxième paramètre RBG étant : un deuxième facteur d'échelle, N, lié à une longueur de l'allocation de ressources de domaine fréquentiel ou une deuxième taille RBG liée à la longueur de l'allocation de ressources de domaine fréquentiel ;
• la longueur de l'allocation de ressources de domaine fréquentiel est basée sur le deuxième paramètre RBG ; et
• la longueur de l'allocation de ressources de domaine fréquentiel est fournie en unités d'un deuxième RBG, où une taille du deuxième RBG est : N PRB ou la deuxième taille RBG.

**15.** Procédé selon la revendication 14, dans lequel l'allocation de ressources de domaine fréquentiel fournit une valeur d'indication de ressources, RIV, qui est mappée à la position de début et à la longueur de l'allocation de ressources de domaine fréquentiel sur la base respectivement du premier paramètre RBG et du deuxième paramètre RBG.

**16.** Procédé selon la revendication 15, dans lequel le premier facteur d'échelle (M) est égal au deuxième facteur d'échelle (N), et le nombre de bits nécessaires pour représenter le RIV est :

$$\left\lceil \log_2 \left( \frac{N_{RB}^{BWP}}{M} \left( \frac{N_{RB}^{BWP}}{M} + 1 \right)/2 \right) \right\rceil$$

où $N_{RB}^{BWP}$ est le nombre de PRB dans la partie de bande passante correspondante.

**17.** Procédé selon la revendication 14 ou 15, dans lequel le premier paramètre RBG et le deuxième paramètre RBG sont égaux ou sont le même paramètre ; et dans lequel le premier paramètre RBG et le deuxième paramètre RBG présentent une valeur égale à $2^{\left(\frac{L-K}{2}\right)}$ où, lors de l'exclusion de l'allocation de ressources de domaine fréquentiel :

K est une valeur de réduction de bits qui correspond à un nombre de bits inclus dans un ou plusieurs champs dans le deuxième format DCI qui sont à réduction de bits ou à exclusion de bits dans le premier format DCI ; et
L est une valeur d'augmentation de bits qui correspond à un nombre de bits inclus dans un ou plusieurs champs dans le premier format DCI qui sont ajoutés au premier format DCI par comparaison au deuxième format DCI.

**18.** Station de base pour fournir un alignement de taille de format d'informations de commande de liaison descendante, DCI, entre un premier format DCI et un deuxième format DCI, la station de base étant adaptée pour réaliser le procédé selon l'une quelconque des revendications 10 à 17.

SIZE OF BWP

1 PRB

**FIG. 1**

POSSIBLE FREQUENCY DOMAIN ALLOCATION OF EXAMPLE (1) WHERE M=N=1

SIZE OF BWP

1 PRB

**FIG. 2**

POSSIBLE FREQUENCY DOMAIN ALLOCATION OF EXAMPLE (2) WHERE M=1, N=2

SIZE OF BWP

1 PRB

## FIG. 3

POSSIBLE FREQUENCY DOMAIN ALLOCATION OF EXAMPLE (3) WHERE M=2, N=1

SIZE OF BWP

1 PRB

## FIG. 4

POSSIBLE FREQUENCY DOMAIN ALLOCATION OF EXAMPLE (4) WHERE M=N=2

| DCI FORMAT | USS OR CSS | ACTIVE BWP | | |
|---|---|---|---|---|
| | | INITIAL | DEFAULT | "WIDE" |
| 0-0/1-0 | CSS | SIZE A0 | | |
| 0-0/1-0 | USS | | IF DCI SIZE BUDGET ALLOWS: SIZE A1 OTHERWISE: SIZE A0 | IF DCI SIZE BUDGET ALLOWS: SIZE A2 OTHERWISE: SIZE A0 |
| 0-1 | USS | SIZE B0 | SIZE B1 | SIZE B2 |
| 1-1 | USS | SIZE C0 | SIZE C1 | SIZE C2 |
| 2-0 | CSS | SIZE D (UP TO 128 BITS) | | |
| 2-1 | CSS | SIZE E (UP TO 126 BITS | | |
| 2-2 | CSS | SIZE A0 | | |
| 2-3 | CSS | | | |
| **0-3** | **USS** | **SIZE A0** | | |
| **1-3** | **USS** | **SIZE A0** | | |

## FIG. 5

*DCI SIZES FOR DIFFERENT FORMATS, USS vs CSS, AND DIFFERENT BWP*

FIG. 6

*FIG. 7*

EP 3 791 528 B1

**FIG. 8**

DETERMINE ONE OR MORE RBG PARAMETERS (ONE OR MORE RBG SCALING FACTORS OR ONE OR MORE RBG SIZES) FOR INTERPRETING A FREQUENCY-DOMAIN RESOURCE ALLOCATION FOR A FIRST DCI FORMAT, WHERE THE ONE OR MORE RBG PARAMETERS ADJUST A GRANULARITY OF THE FREQUENCY-DOMAIN RESOURCE ALLOCATION SUCH THAT A NUMBER OF BITS NEEDED TO SPECIFY THE FREQUENCY-DOMAIN RESOURCE ALLOCATION IS ADJUSTED SUCH THAT A SIZE OF THE FIRST DCI FORMAT IS ALIGNED WITH A SIZE OF A SECOND DCI FORMAT
900

RECEIVE DCI HAVING THE FIRST DCI FORMAT
902

INTERPRET THE FREQUENCY-DOMAIN RESOURCE ALLOCATION OF THE DCI IN ACCORDANCE WITH THE ONE OR MORE RBG PARAMETERS (E.G., DETERMINE A START POSITION AND A LENGTH OF THE FREQUENCY-DOMAIN RESOURCE ALLOCATION BASED ON THE ONE OR MORE RBG PARAMETERS)
904

*FIG. 9*

DETERMINE ONE OR MORE RBG PARAMETERS (ONE OR MORE RBG SCALING FACTORS OR ONE OR MORE RBG SIZES) FOR INTERPRETING A FREQUENCY-DOMAIN RESOURCE ALLOCATION FOR A FIRST DCI FORMAT, WHERE THE ONE OR MORE RBG PARAMETERS ADJUST A GRANULARITY OF THE FREQUENCY-DOMAIN RESOURCE ALLOCATION SUCH THAT A NUMBER OF BITS NEEDED TO SPECIFY THE FREQUENCY-DOMAIN RESOURCE ALLOCATION IS ADJUSTED SUCH THAT A SIZE OF THE FIRST DCI FORMAT IS ALIGNED WITH A SIZE OF A SECOND DCI FORMAT
1000

GENERATE DCI HAVING THE FIRST DCI FORMAT, THE DCI COMPRISING A FREQUENCY-DOMAIN RESOURCE ALLOCATION IN ACCORDANCE WITH THE ONE OR MORE RBG PARAMETERS
1002

TRANSMIT THE DCI TO A WIRELESS DEVICE
1004

*FIG. 10*

**FIG. 11**

1200

HOST COMPUTER 1210

| SW 1211 | HOST APPLICATION 1212 |

| HW 1215 | COMMUNICATION INTERFACE 1216 |
| | PROCESSING CIRCUITRY 1218 |

1260

1250

BASE STATION 1220

SW 1221

| HW 1225 | COMMUNICATION INTERFACE 1226 |
| | RADIO INTERFACE 1227 |
| | PROCESSING CIRCUITRY 1228 |

UE 1230

| SW 1231 | CLIENT APPLICATION 1232 |

| HW 1235 | RADIO INTERFACE 1237 |
| | PROCESSING CIRCUITRY 1238 |

1270

*FIG. 12*

BEGIN

HOST COMPUTER
PROVIDES USER DATA
1310

HOST COMPUTER
EXECUTES HOST
APPLICATION
1311

HOST COMPUTER
INITIATES
TRANSMISSION
CARRYING THE USER
DATA TO THE UE
1320

BASE STATION
TRANSMITS THE USER
DATA
1330

UE EXECUTES THE
CLIENT APPLICATION
1340

END

FIG. 13

BEGIN

HOST COMPUTER
PROVIDES USER DATA
1410

HOST COMPUTER
INITIATES
TRANSMISSION
CARRYING THE USER
DATA TO THE UE
1420

UE RECEIVES THE USER
DATA
1430

END

FIG. 14

BEGIN

UE RECEIVES INPUT DATA PROVIDED AT HOST COMPUTER
1510

UE EXECUTES CLIENT APPLICATION
1511

UE PROVIDES USER DATA
1520

UE EXECUTES CLIENT APPLICATION
1521

UE INITIATES TRANSMISSION OF THE USER DATA TO THE HOST COMPUTER
1530

HOST COMPUTER RECEIVES USER DATA TRANSMITTED FROM THE UE
1540

END

*FIG. 15*

BEGIN

BASE STATION RECEIVES USER DATA FROM UE
1610

BASE STATION INITIATES TRANSMISSION OF USER DATA TO THE HOST COMPUTER
1620

HOST COMPUTER RECEIVES THE USER DATA
1630

END

*FIG. 16*

VIRTUAL APPARATUS
1700

UNIT
1702

UNIT
1704

**FIG. 17**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG**. DL Resource Allocation Aspects. *RAN WG1 Meeting #89, R1-1708017*, 15 May 2017
- **NOKIA et al.** On resource allocation in frequency domain for PDSCH and PUSCH in NR. *RAN WG1 Ad Hoc Meeting #2, R1-1710989*, 20170627

- **INTEL CORPORATION**. On compact DCI format for NR URLLC. *RAN WG1 Meeting #92bis, R1-1804740*, 20180416
- **MITSUBISHI ELECTRIC**. Multi-cluster PUSCH resource allocation. *RAN WG1 #61 meeting, R1-103238*